# FASCICULE DE BREVET EUROPEEN

(11) **EP 3 393 975 B1**
(45) Date de publication et mention de la délivrance du brevet: **15.04.2020**
(21) Numéro de dépôt: 16831901.0
(22) Date de dépôt: 22.12.2016
(51) Int. Cl.: C01G 23/053, C01G 25/02, C01G 41/02, C01G 49/06, C01B 33/187, C01F 7/34, C01F 7/44, C01G 9/02, B01J 21/06, B01J 21/08, B01J 23/30, B01J 23/745

(54) **NOUVEAUX NANOMATÉRIAUX, PROCÉDÉ DE LEUR PRÉPARATION ET LEUR UTILISATION**
NEUEN NANOMATERIALIEN, VERFAHREN ZU IHRER HERSTELLUNG UND IHRE VERWENDUNG
NEW NANOMATERIALS, METHOD FOR PRODUCING THE SAME AND THEIR USE

(30) Priorité: 23.12.2015 FR 1563227
(43) Date de publication de la demande: 31.10.2018
(73) Titulaire: Commissariat à l'Énergie Atomique et aux Énergies Alternatives, 75015 Paris (FR); Université de Cergy-Pontoise, 95011 Cergy-Pontoise Cedex (FR)
(72) Inventeur: PASTERNAK, Nicolas, 95450 Themericourt (FR); LINDER, Nancy, 95000 Neuville Sur Oise (FR)
(74) Mandataire: Plasseraud IP
(86) Numéro de dépôt international: PCT/FR2016/053641
(87) Numéro de publication internationale: WO 2017/109426

(56) Documents cités:
- DOREMIEUX-MORIN C ET AL: "Rigid lattice proton NMR study of the constitutive water of titanium oxides (rutile, anatase, amorphous oxide)", JOURNAL OF COLLOID AND INTERFACE SCIENCE, ACADEMIC PRESS, NEW YORK, NY, US, vol. 95, no. 2, 1 octobre 1983 (1983-10-01), pages 502-512, XP024187291, ISSN: 0021-9797, DOI: 10.1016/0021-9797(83)90210-2 [extrait le 1983-10-01]
- XU Z ET AL: "Size effects of nanocrystalline TiO2 on As(V) and As(III) adsorption and As(III) photooxidation", JOURNAL OF HAZARDOUS MATERIALS, ELSEVIER, AMSTERDAM, NL, vol. 168, no. 2-3, 15 septembre 2009 (2009-09-15), pages 747-752, XP026219163, ISSN: 0304-3894, DOI: 10.1016/J.JHAZMAT.2009.02.084 [extrait le 2009-02-25]
- DEHONG CHEN ET AL: "Facile Synthesis of Monodisperse Mesoporous Zirconium Titanium Oxide Microspheres with Varying Compositions and High Surface Areas for Heavy Metal Ion Sequestration", ADVANCED FUNCTIONAL MATERIALS, vol. 22, no. 9, 9 mai 2012 (2012-05-09), pages 1966-1971, XP055221472, DE ISSN: 1616-301X, DOI: 10.1002/adfm.201102878
- WANG Y ET AL: "Preparation and photocatalytic activity of mesoporous TiO2 derived from hydrolysis condensation with TX-100 as template", MATERIALS SCIENCE AND ENGINEERING B, ELSEVIER SEQUOIA, LAUSANNE, CH, vol. 128, no. 1-3, 15 mars 2006 (2006-03-15), pages 229-233, XP027953847, ISSN: 0921-5107 [extrait le 2006-03-15]
- GUILLERMO CALLEJA ET AL: "Study on the synthesis of high-surface-area mesoporous TiO2 in the presence of nonionic surfactants", INDUSTRIAL & ENGINEERING CHEMISTRY RESEARCH, AMERICAN CHEMICAL SOCIETY, US, vol. 43, 12 mai 2004 (2004-05-12), pages 2485-2492, XP002590154, ISSN: 0888-5885, DOI: 10.1021/IE030646A [extrait le 2004-04-14]

## Description

L'invention concerne un procédé de préparation d'un nanomatériau, le nanomatériau ainsi obtenu ainsi que son utilisation, notamment en photocatalyse.

Les matériaux nanocristallins suscitent un intérêt croissant grâce à leurs propriétés particulières. Excellents photocatalyseurs notamment pour la dégradation de contaminants organiques, les oxydes de titane sont très utilisés actuellement.

Les oxydes de titane possèdent trois structures cristallines aux propriétés différentes : Anatase, Rutile, et Brookite. Des trois configurations, seule le rutile est stable [1], l'anatase étant métastable [1]. De part, sa difficulté à être synthétisé, le brookite est très rarement rencontré en photocatalyse [2].

D'une manière générale, l'anatase affiche une activité photocatalytique plus importante par rapport au rutile. Bien que sa capacité à absorber la lumière solaire est un peu plus faible, l'anatase possède une grande surface spécifique (ou d'adsorption), un plus grand nombre de groupements hydroxyles à la surface et un taux de recombinaison de charge plus bas [3].

Lorsqu'aucun additif (sel, acide fort, ....) n'est ajouté, la structure anatase est généralement obtenue en calcinant les matériaux obtenus à forte température (>700°C) pendant plusieurs heures [4]. L'anatase est plutôt réactif en photocatalyse avec de la lumière UV. Par contre, ses performances photocatalytiques sont beaucoup moindre avec de la lumière visible. De nombreux efforts ont été fait pour rendre l'anatase plus performant avec de la lumière visible, par exemple par greffage de nanoparticules métalliques.

Quelques études [5] [6] ont décrit la synthèse de matériau hybride Ti/SiO₂ en milieu fortement organique suivi d'un traitement thermique à haute température. Les matériaux obtenus montrent une activité photocatalytique considérablement augmentée, puisque la surface spécifique disponible, la quantité d'eau adsorbée et le nombre de groupements hydroxyles y seraient augmentés. Toutefois, l'utilisation de solvants organiques et la dépense énergétique nécessaire pour le traitement thermique constituent des inconvénients non négligeables d'un point de vue écologique.

Il existe donc toujours un besoin pour de nouveaux nanomatériaux stables présentant de bonnes performances photocatalytiques avec de la lumière visible ainsi qu'avec de la lumière UV.

Ainsi, un objectif de l'invention est de proposer un tel nanomatériau.

Un autre objectif de l'invention est de fournir un procédé de préparation d'un tel nanomatériau.

Il est du mérite des inventeurs d'avoir découvert, de manière très inattendue et après de nombreuses recherches, qu'il était possible de préparer des oxydes de titane et oxydes hybrides présentant une surface spécifique élevée et un nombre de groupements hydroxyles augmentés sans avoir recours à des solvants organiques.

Un objet de l'invention se rapporte donc à un procédé de préparation d'un nanomatériau composé de 80 à 100 % en moles de TiO₂ et de 0 à 20% en moles d'un autre oxyde métallique ou semi métallique, notamment choisi parmi SiO₂, ZrO₂, WO₃, ZnO, Al₂O₃ et Fe₂O₃, par exemple parmi SiO₂ et ZrO₂, présentant une surface spécifique comprise entre 100 et 300 m².g⁻¹ et de 1 à 3 groupements hydroxyles par nm², ledit procédé comprenant les étapes suivantes :
a) Synthèse d'un matériau composé de 80 à 100 % en moles de TiO₂ et de 0 à 20% en moles d'un autre oxyde à partir d'un précurseur d'oxyde de titane ou d'un mélange d'un précurseur d'oxyde de titane et d'un précurseur de l'autre oxyde, la synthèse étant effectuée en milieu aqueux à un pH de 0 à 1 et une température allant de 40 à 95°C et en présence d'un tensioactif non-ionique choisi parmi les éthers alcényles de polyoxyéthylène glycol et les poloxamères ;
b) Elimination du tensioactif du matériau synthétisé à l'étape précédente par les étapes suivantes :
   b1) Préparation d'un matériau métallisé par lavage du matériau comprenant le tensioactif avec une solution aqueuse de sel métallique bivalent et une solution aqueuse d'ammoniac,
   b2) Récupération du matériau métallisé d'une part et d'une solution de lavage d'autre part,
   b3) Traitement du matériau métallisé avec un acide minéral pour enlever le métal de celui-ci,
c) Récupération d'un nanomatériau exempt de tensioactif d'une part et d'une solution résiduelle d'autre part.

L'utilisation d'un tensioactif non-ionique choisi parmi les éthers alcényles de polyoxyéthylène glycol et les poloxamères permet d'effectuer la synthèse du matériau en milieu aqueux très acide sans ajout d'éthanol. En effet, généralement, la synthèse d'oxyde de titane est effectuée sans l'assistance d'un tensioactif mais en milieu organique, notamment dans de l'éthanol [7, 8] [17] décrit la synthèse d'oxyde de titane en présence d'un tensioactif. L'apport d'éthanol ralentit la réactivité du précurseur d'oxyde de titane dont l'hydrolyse est instantanée produisant ainsi de l'oxyde de titane amorphe. De façon tout à fait surprenante, l'ajout d'un tensioactif non-ionique choisi parmi les éthers alcényles de polyoxyéthylène glycol et les poloxamères dans le milieu réactionnel aqueux acide permet la synthèse d'un nanomatériau sans avoir besoin de recourir à de l'éthanol ou un autre solvant organique. Sans vouloir être lié par une quelconque théorie, les inventeurs pensent que le précipité résultant de l'hydrolyse spontanée du précurseur d'oxyde de titane disparaît grâce aux conditions acides avant de réapparaitre avec l'interaction entre le réseau Ti-O-Ti et le tensioactif. La réaction peut être optimisée en soumettant le mélange réactionnel après l'hydrolyse spontanée du ou des précurseurs à une forte agitation.

Un éther alcényle de polyoxyéthylène glycol selon l'invention est avantageusement un éther de polyoxyéthylène glycol et d'oléyl, de préférence un éther de polyoxyéthylène(10) oléyl répondant à la formule C₁₈H₃₅(EO)₁₀OH, commercialisé par exemple par BASF sous la dénomination Brij 97.

Des exemples de poloxamères répondent généralement à la formule (EO)₅₋₁₀₆(PO)₃₃₋₇₀(EO)₅₋₁₀₆, où EO est une unité de répétition oxyéthylène de formule CH₂CH₂O et PO est une unité de répétition oxypropylène de formule CH(CH₃)CH₂O.

Un poloxamère selon l'invention est avantageusement choisi parmi (EO)₅(PO)₇₀(EO)₅ (commercialisé par exemple par BASF sous la dénomination Pluronic L121), (EO)₁₃(PO)₃₀(EO)₁₃ (commercialisé par exemple par BASF sous la dénomination Pluronic L64), (EO)₂₀(PO)₃₀(EO)₂₀ (commercialisé par exemple par BASF sous la dénomination Pluronic P65), (EO)₂₆(PO)₃₉(EO)₂₆ (commercialisé par exemple par BASF sous la dénomination Pluronic P85), (EO)₁₇(PO)₅₆(EO)₁₇ (commercialisé par exemple par BASF sous la dénomination Pluronic P103), (EO)₂₀(PO)₇₀(EO)₂₀ (commercialisé par exemple par BASF sous la dénomination Pluronic P123), (EO)₈₀(PO)₃₀(EO)₈₀ (commercialisé par exemple par BASF sous la dénomination Pluronic F68), (EO)₁₀₆(PO)₇₀(EO)₁₀₆ (commercialisé par exemple par BASF sous la dénomination Pluronic F127), et (EO)₁₀₀(PO)₃₉(EO)₁₀₀ (commercialisé par exemple par BASF sous la dénomination Pluronic F88), (EO)₁₉(PO)₃₃(EO)₁₉ (commercialisé par exemple par BASF sous la dénomination Pluronic 25R4).

De manière avantageuse, le poloxamère répond à la formule (EO)₂₀-(PO)₇₀-(EO)₂₀, commercialisé par exemple par BASF sous la dénomination Pluronic P123.

Le précurseur d'oxyde de titane peut par exemple être choisi parmi les alcoxydes de titane. De préférence, le précurseur d'oxyde de titane est choisi parmi l'isopropoxide de titane (TiPOT), l'éthoxyde de titane, le n-propoxyde de titane et/ou le butoxyde de titane. Parmi de tels précurseurs, l'isopropoxyde de titane (TiPOT) est particulièrement préféré. Ce précurseur est en effet très réactif en milieu aqueux et permet la formation spontanée d'une précipitation.

Pour ce qui est de l'autre oxyde, tout oxyde métallique ou semi métallique permettant d'améliorer les propriétés du nanomatériau à base de TiO₂ peut être utilisé. L'homme du métier pourra notamment utiliser un oxyde métallique ou semi métallique choisi parmi SiO₂, ZrO₂, WO₃, ZnO, Al₂O₃ et Fe₂O₃, notamment parmi SiO₂, ZrO₂, WO₃, ZnO et Al₂O₃, par exemple parmi SiO₂ et ZrO₂.

Le précurseur de l'autre oxyde peut notamment être choisi parmi les orthosilicates de silicium, les alcoxydes de zirconium, le sodium tungstate (Na2WO4), isopropoxyde de zinc (Zn(IpOH)₂), et l'isopropoxyde d'aluminium, de préférence parmi les orthosilicates de silicium et les alcoxydes de zirconium.

Les orthosilicates de silicium peuvent être choisis, par exemple mais de manière non limitative, parmi l'orthosilicate de tétraméthyle (TMOS) et l'orthosilicate de tétraéthyle (TEOS). De préférence, il s'agit de l'orthosilicate de tétraéthyle (TEOS).

Un exemple non limitatif d'un alcoxyde de zirconium pouvant être utilisé est le propoxyde de zirconium.

Dans un mode de réalisation, l'étape a) de synthèse du matériau comprend les étapes suivantes :
a1) préparation d'une solution aqueuse acide du tensioactif non-ionique,
a2) ajout du précurseur d'oxyde de titane ou du mélange du précurseur d'oxyde de titane et du précurseur de l'autre oxyde à la solution aqueuse acide du tensioactif non-ionique, un précipité se formant alors,
a3) agitation forte du milieu réactionnel de façon à dissoudre le précipité formé à l'étape a2) puis faire polymériser le précurseur d'oxyde de titane ou le mélange du précurseur d'oxyde de titane et du précurseur de l'autre oxyde,
a4) placement du mélange réactionnel de l'étape a3) en conditions statiques pendant au moins 24h, par exemple pendant 24 à 72h, de préférence entre 36 et 48h, de préférence encore pendant environ 48h,
a5) récupération d'un matériau, composé de 80 à 100 % en moles de TiO₂ et de 0 à 20% en moles de l'autre oxyde d'une part et d'une solution résiduelle d'autre part.

Avantageusement, l'étape a1) de la synthèse du matériau consiste en l'ajout, et le mélange, d'un tensioactif non-ionique choisi parmi les éthers alcényles de polyoxyéthylène glycol et les poloxamères dans une solution aqueuse ayant un pH de 0 à 1, de préférence 0 et à une température de 40°C à 60°C, de préférence d'environ 50°C. A l'issue de l'étape a), on obtient ainsi une solution aqueuse comprenant notamment ledit tensioactif.

La solution aqueuse mise en œuvre à l'étape a1) est avantageusement constituée du tensioactif non-ionique, d'un solvant aqueux, de préférence de l'eau, et d'un acide, de préférence choisi parmi l'acide phosphorique, l'acide sulfurique, l'acide chlorhydrique, l'acide acétique, l'acide oxalique et un de leurs mélanges compatibles, de préférence encore l'acide chlorhydrique. L'homme du métier saura déterminer les concentrations de solvant aqueux et d'acide afin d'obtenir un pH de 0 à 1, de préférence de 0. La solution aqueuse du tensioactif est de préférence exempte de tout solvant organique.

Après ajout du tensioactif dans la solution aqueuse, un mélange est effectué de façon à dissoudre le tensioactif dans la solution aqueuse. Ce mélange est typiquement effectué sous agitation, de préférence sous agitation vigoureuse.

Par ailleurs, l'étape a1) est avantageusement mise en œuvre à une température comprise entre 40°C et 60°C, de préférence entre 45°C et 55°C, de préférence encore à une température d'environ 50°C de façon à obtenir la meilleure solubilisation possible du tensioactif.

L'étape a2) consiste ensuite à ajouter un précurseur d'oxyde de titane ou un mélange d'un précurseur d'oxyde de titane et d'un précurseur de l'autre oxyde à la solution obtenue lors de l'étape précédente. Le précurseur d'oxyde de titane étant très réactif en milieux aqueux, une précipitation a lieu spontanément. Dans le cas où l'autre oxyde est du SiO₂, elle est de moins en moins importante en augmentant la part de son précurseur.

Cette étape est avantageusement effectuée à une température comprise entre 40°C et 60°C, de préférence entre 45°C et 55°C, de préférence encore à une température d'environ 50°C.

L'étape a3) consiste à soumettre le mélange réactionnel à une agitation forte du milieu réactionnel de façon à dissoudre le précipité formé à l'étape a2) puis faire polymériser le précurseur d'oxyde de titane ou le mélange du précurseur d'oxyde de titane et du précurseur de l'autre oxyde. En effet, par une forte agitation, le précipité se dissout très vite, avant qu'une nouvelle précipitation, issue de la polymérisation entre la structure tridimensionnelle issue de l'hydrolyse et la polycondensation des précurseurs inorganiques et le réseau micellaire, n'apparaisse.

L'étape a4) consiste enfin à placer le milieu réactionnel de l'étape précédente en conditions statiques, de préférence à une température supérieure à 40°C. Avantageusement, le placement en conditions statiques s'effectue en deux phases, une première phase à une température comprise entre 40°C et 60°C, de préférence entre 45°C et 55°C, de préférence encore à une température d'environ 50°C pendant une durée de 12h à 36h, de préférence d'environ 24h ; puis une deuxième phase à une température comprise entre 80°C et 100°C, de préférence entre 85°C et 95°C, de préférence encore à une température d'environ 90°C pendant une durée de 12h à 36h, de préférence d'environ 24h. On obtient, à l'issue de l'étape a4), un dioxyde de titane ou un oxyde hybride homogène.

Le matériau synthétisé conformément à l'étape a) du procédé de l'invention comprend à la surface le tensioactif mis en œuvre lors de la synthèse. L'étape d'élimination du tensioactif réalisée ensuite permet une élimination efficace et rapide de ce tensioactif.

De manière avantageuse, le tensioactif peut être éliminé *in situ* du matériau, c'est-à-dire directement à la suite de l'étape de synthèse sans étape intermédiaire. Les oxyde de titane et hybrides préparés à l'étape de synthèse sont obtenus sous forme de poudres très fines ce qui présente un inconvénient majeur lorsqu'il est nécessaire de les séparer du milieu réactionnel car elles passent à travers tout système de filtration, même des frittés à très petites pores affaiblissant ainsi considérablement le rendement de l'opération.

Dans tous les cas et comme détaillé ci-dessus, l'élimination du tensioactif s'effectue avantageusement en trois étapes :
b1) Préparation d'un matériau métallisé par lavage du matériau obtenu à l'étape a) comprenant le tensioactif avec une solution aqueuse de sel métallique bivalent et une solution aqueuse d'ammoniac,
b2) Récupération du matériau métallisé d'une part et d'une solution de lavage d'autre part, et
b3) Traitement du matériau métallisé avec un acide minéral pour enlever le métal de celui-ci.

L'étape b1) consiste en la préparation d'un matériau métallisé par traitement du matériau comprenant le tensioactif avec une solution aqueuse de sel métallique bivalent et une solution aqueuse d'ammoniac.

Un « traitement » tel qu'entendu à l'étape b1) du procédé peut consister à immerger, de préférence sous agitation, le matériau comprenant un tensioactif dans une solution aqueuse de sel métallique bivalent et une solution aqueuse d'ammoniac.

Un tel traitement est de préférence effectué pendant une durée comprise entre environ 5 et 20 minutes, de préférence entre environ 10 et 20 minutes, de préférence pendant une durée d'environ 10 minutes. Au-delà de 20 minutes, l'ammoniac détériore en effet la surface des matériaux hybrides.

Avantageusement, le traitement est effectué à température ambiante, c'est-à-dire à une température comprise entre environ 15°C et 30°C. La température utilisée est ainsi bien inférieure aux températures mises en œuvre dans des procédés d'extraction connus de type calcination.

Les ions métalliques, provenant de la solution aqueuse de sel métallique bivalent, typiquement une solution aqueuse de nitrate de cuivre (II), de préférence une solution aqueuse de nitrate de cuivre (II) trihydratée, jouent un rôle primordial dans ledit procédé. Ces ions métalliques réagissent avec les groupements hydroxyles de la surface du matériau, qui protègent la surface, entraînant le décrochage du tensioactif du matériau, tout en agglomérant les nanocristaux ou nanoparticules fins d'oxyde de titane ou d'oxyde hybride. Cette agglomération des nanocristaux ou nanoparticules favorise ainsi la retenue de l'oxyde sur le système de filtration, comme par exemple sur un fritté.

Le sel métallique bivalent peut avantageusement être choisi parmi les sels de cuivre (II), cobalt (II), nickel (II) et zinc (II). De préférence, le sel métallique bivalent est un sel de cuivre (II) ou de zinc (II), de préférence encore de cuivre (II).

Avantageusement, il peut être choisi parmi les sels inorganiques, tels que par exemple les sulfates ou nitrates. De préférence, il s'agit d'un nitrate.

L'ammoniac est utilisé afin de déprotoner les groupements fonctionnels (groupements hydroxyles à la surface). De plus, l'ammoniac permet de déprotoner les groupements OH du tensioactif ce qui permet la complexation des ions métalliques. Le tensioactif complexé avec les ions métalliques peut facilement être séparé du nanomatériau.

L'homme du métier saura adapter la concentration de la solution aqueuse de sel métallique bivalent, en fonction du sel, de la composition du nanomatériau et du tensioactif utilisé. Il pourra notamment utilisé une solution aqueuse de sel métallique bivalent, par exemple une solution aqueuse de nitrate de cuivre (II), de préférence trihydratée, à une concentration d'environ 0,02 à 0,08 mol.L⁻¹, de préférence d'environ 0,05 mol.L⁻¹ et la solution aqueuse d'ammoniac, notamment à une concentration de 35-37 % v/v.

De manière avantageuse, des quantités d'environ 40 à 50 mL de solution aqueuse de sel métallique bivalent, par exemple de nitrate de cuivre (II), et d'environ 1,4 à 3 mL de solution aqueuse d'ammoniac peuvent être utilisées pour 1g de matériau comprenant le tensioactif.

L'ajout de la solution aqueuse d'ammoniac est avantageusement conduit de façon à obtenir un pH de 10 à 11,5, de préférence de 10 à 10,7, plus préférentiellement d'environ 10,5. L'homme du métier saura adapter la concentration et/ou la quantité d'ammoniac afin d'atteindre le pH souhaité.

Selon un mode de réalisation particulièrement avantageux d'une élimination *in situ* du tensioactif, la solution aqueuse d'ammoniac et la solution aqueuse de sel métallique sont directement incorporées au milieu réactionnel comprenant le matériau. Cette incorporation peut se faire par ajout des solutions aqueuses d'ammoniac et de sel métallique bivalent au milieu réactionnel comprenant le matériau ou, de préférence, par ajout du milieu réactionnel comprenant le matériau aux solutions aqueuses d'ammoniac et de sel métallique bivalent. Lorsque les solutions aqueuses d'ammoniac et de sel métallique bivalent sont ajoutées au milieu réactionnel comprenant le matériau, ces solutions peuvent être ajoutées l'une après l'autre ou simultanément. Dans une variante de ce mode de réalisation, la solution aqueuse de sel métallique bivalent est d'abord mélangée à la solution aqueuse d'ammoniac puis le mélange est ajouté au milieu réactionnel comprenant le matériau. Lorsque l'incorporation est effectuée par ajout du milieu réactionnel dans les solutions aqueuses d'ammoniac et de sel métallique bivalent, ces solutions sont avantageusement mélangées, notamment par ajout de la solution aqueuse d'ammoniac dans la solution aqueuse de sel métallique bivalent.

Après incorporation des solutions aqueuses d'ammoniac et de sel métallique bivalent au milieu réactionnel, celui-ci est avantageusement agité afin d'augmenter le rendement de métallisation du matériau.

L'élimination *in situ* du tensioactif est particulièrement avantageuse du fait que les nanoparticules ou nanocristaux du nanomatériau selon l'invention sont très, très fins rendant ainsi toute séparation du milieu réactionnel extrêmement difficile et dans certains cas même impraticable.

Selon un autre mode de réalisation, la solution aqueuse de sel métallique bivalent est mélangée dans une première étape à la solution aqueuse d'ammoniac. Le matériau comprenant le tensioactif préalablement séparé du milieu réactionnel est immergé dans une seconde étape dans le mélange de solution aqueuse de sel métallique bivalent et de solution aqueuse d'ammoniac.

L'étape b2) de l'élimination du tensioactif consiste à récupérer le matériau métallisé obtenu après l'étape a) d'une part et d'une solution de lavage d'autre part. Une telle étape de récupération du matériau métallisé peut par exemple être effectuée par séparation, par tout moyen connu et notamment par filtration, du mélange obtenu lors de l'étape b1). Cette étape de récupération, notamment par filtration, permet d'obtenir d'une part le matériau métallisé et d'autre part une solution de lavage, essentiellement composée du tensioactif décroché du matériau, des ions métalliques n'ayant pas réagi avec les groupements hydroxyles de la surface du matériau, et d'ammoniac résiduel et, lorsque la métallisation a été effectué *in situ,* des résidus de la synthèse du matériau. Sans vouloir être lié par une quelconque théorie, les présents inventeurs pensent que les différents constituants de la solution de lavage se trouvent sous forme de complexe(s).

On entend ici par « matériau métallisé », le matériau modifié par l'étape a) du procédé conforme à l'invention, notamment par greffage d'ions métalliques, par exemple de cuivre (II), à la surface dudit matériau.

Une étape de rinçage du matériau métallisé récupéré à l'étape b2) peut avantageusement être effectuée, par exemple avec de l'eau.

Une étape de séchage du matériau métallisé, rincé ou non, peut avantageusement être effectuée. Le matériau métallisé peut ainsi sécher à température ambiante, par exemple comprise entre 15°C et 30°C, ou dans une étuve, par exemple à une température d'environ 40°C à 60°C, de préférence d'environ 50°C.

L'étape b3) dudit procédé consiste à traiter le matériau métallisé obtenu à l'étape b2), éventuellement rincé et/ou séché, avec un acide minéral pour enlever le métal du matériau métallisé, c'est-à-dire les ions métalliques greffés lors de l'étape a) du procédé.

L'étape b3) du procédé conforme à l'invention permet donc, en particulier, d'enlever les ions métalliques précédemment greffés au matériau, et par conséquent d'extraire totalement le tensioactif restant dans le matériau, chélaté aux ions métalliques.

On entend par « acide minéral » tout acide minéral capable d'enlever le métal précédemment greffé au matériau, avantageusement sans détériorer le tensioactif. De préférence, l'acide minéral est une solution d'acide nitrique (HNO₃) ou une solution d'acide chlorhydrique (HCl). De préférence encore, l'acide minéral est une solution d'acide nitrique (HNO₃).

Un « traitement » tel qu'entendu à l'étape b3) du procédé peut consister à immerger, de préférence sous agitation, le matériau métallisé dans une solution d'acide minéral
Selon un mode de réalisation particulier, une quantité d'environ 5 ml de solution d'acide nitrique, par exemple à 60% v/v, peut être utilisée pour 100 mg de matériau métallisé.

Avantageusement, le traitement est effectué à température ambiante, c'est-à-dire à une température comprise entre environ 15°C et 30°C. La température utilisée est ainsi, ici aussi, bien inférieure aux températures mises en œuvre dans des procédés d'extraction connus de type calcination.

De préférence, le traitement est effectué pendant une durée comprise entre environ 5 et 30 minutes, de préférence entre environ 10 et 25 minutes, de préférence pendant une durée d'environ 20 minutes.

Dans un mode de réalisation particulièrement avantageux, le traitement à l'acide minéral est suivi d'un lavage à l'eau, de préférence effectué dans une centrifugeuse. Avantageusement, plusieurs cycles de centrifugation successifs, de préférence 2 cycles, sont effectués, en prélevant la solution aqueuse usagée après chaque cycle et en la remplaçant par de l'eau propre.

Après le traitement à l'acide minéral, le matériau est récupéré à l'étape c). Il est exempt de tensioactif. On entend ici par « exempt de tensioactif » que le tensioactif ne peut plus être détecté. On obtient ainsi le matériau exempt de tensioactif d'une part et une solution résiduelle d'autre part.

Une étape de rinçage du matériau exempt de tensioactif récupéré à l'étape c) peut avantageusement être effectuée, par exemple avec, de l'eau pour enlever des résidus d'acide.

Une étape de séchage du matériau exempt de métal et de tensioactif, rincé ou non, peut avantageusement être effectuée. Le matériau exempt de tensioactif peut ainsi sécher à température ambiante, par exemple comprise entre 15°C et 30°C, ou dans une étuve, par exemple à une température d'environ 40°C à 60°C, de préférence d'environ 50°C.

Le matériau, récupéré après l'étape c) du procédé selon l'invention, et éventuellement rincé et/ou séché, est non seulement exempt de tensioactif mais sa surface n'a pas non plus été dégradée par le procédé selon l'invention. De plus, lorsque le matériau selon l'invention est constitué de dioxyde de titane, il a une structure nanocristaline rutile. Sans vouloir être lié par une quelconque théorie, les inventeurs pensent que l'utilisation d'un tensioactif non-ionique choisi parmi les éthers alcényles de polyoxyéthylène glycol et les poloxamères combinée à l'élimination du tensioactifs par lavage tel que décrit ci-dessus est primordial pour l'obtention d'un dioxyde de titane de structure nanocristallin rutile. Les analyses par microscopie électronique par balayage des oxydes hybrides selon l'invention montrent que ces nanomatériaux sont homogènes. Cette homogénéité est un premier indice montrant que les oxydes hybrides sont probablement également cristallins.

De plus, l'utilisation conjointe d'une solution aqueuse d'ammoniac, et d'ions métalliques bivalents pour éliminer le tensioactif mis en œuvre lors de la synthèse permet d'améliorer la réactivité du matériau constitué de dioxyde de titane ou d'oxyde hybride selon l'invention. Un tel procédé permet, de manière intéressante, d'augmenter la surface spécifique, le nombre de groupements hydroxyles (OH) ainsi que la capacité d'absorption d'eau dudit matériau. Enfin, il a été mis en évidence une augmentation de l'acidité de la surface du matériau. Cette acidité proviendrait de l'acide minéral, typiquement l'acide nitrique, utilisé lors de l'étape b) du procédé selon l'invention. Or, il a été précédemment démontré que l'acidification de la surface permet d'améliorer la réactivité [9].

L'invention concerne donc également le matériau susceptible d'être obtenu par le procédé conforme à l'invention en tant que tel. Un tel matériau composé de 80 à 100 % en moles de TiO₂ et de 0 à 20% en moles d'un autre oxyde choisi parmi SiO₂, ZrO₂, WO₃, ZnO, Al₂O₃ et Fe₂O₃ est notamment caractérisé en ce qu'il présente des cations métalliques bivalents adsorbés à la surface du nanomatériau, une acidité à la surface du matériau, provenant de l'étape b) du procédé, des ions nitrate, une surface spécifique comprise entre 100 et 300 m².g⁻¹, notamment entre 110 et 260 m².g⁻¹, et de 1 à 3, notamment de 1,1 à 2,5 groupements hydroxyles par nm². Le pH du matériau est compris entre 3 et 5, de préférence entre 3,5 et 4,5. Le pH des matériaux selon l'invention peut être déterminé en le contactant avec une solution aqueuse d'un indicateur de pH coloré comme par exemple le bleu de bromophénol ou le méthylorange.

Dans un mode réalisation particulier, le nanomatériau selon l'invention est composé de 100% TiO₂ et est de structure nanocristalline rutile. Ce matériau nanocristallin rutile présente avantageusement une surface spécifique de 100 à 200 m².g⁻¹, notamment entre 110 et 160 m².g⁻¹, et de 1 à 3, notamment de 1,5 à 2,5 groupements hydroxyles par nm².

Dans un autre mode de réalisation, le nanomatériau selon l'invention est un oxyde hybride composé de 80 à 95% en moles de TiO₂ et de 5 à 20 % en moles d'un autre oxyde choisi parmi SiO₂, ZrO₂, WO₃, ZnO, Al₂O₃ et Fe₂O₃, de préférence parmi SiO₂ et ZrO₂, de préférence encore l'autre oxyde est du SiO₂. Ce nanomatériau présente avantageusement une surface spécifique de 180 à 300 m².g⁻¹, notamment entre 190 et 260 m².g⁻¹, et de 1 à 2, notamment de 1,1 à 1,5 groupements hydroxyles par nm².

A titre de comparaison, un oxyde de titane subissant une calcination à température supérieure à 650°C est sous forme anatase. Un dioxyde de titane calciné à 550°C (dans les conditions telles décrites dans les exemples) est de structure rutile et a une surface spécifique de 32 m².g⁻¹, 0,6 groupements hydroxyles par nm². Lorsque le dioxyde de titane calciné est mis en contact avec solution la aqueuse d'un indicateur de pH coloré comme par exemple le bleu de bromophénol ou le méthylorange on n'observe aucun changement de couleur ce qui indique un pH neutre d'environ 7.

Typiquement, la surface spécifique des nanomatériaux peut être déterminée par adsorption volumétrique de diazote, de la même manière que dans les exemples.

Le nombre de groupements hydroxyles peut être déterminé par analyse thermogravimétrique (ATG), à partir de la perte massique mesurée au cours du chauffage (typiquement jusqu'à 850°C à une vitesse de 10°C/min). On peut ici aussi se référer aux exemples de la présente demande.

Grâce à leurs caractéristiques physico-chimiques particulières, les nanomatériaux selon l'invention présentent des capacités photocatalytiques exceptionnelles. Sans vouloir être lié par une quelconque théorie, les inventeurs pensent que ces capacités photocatalytiques exceptionnelles constituent un indice de cristallinité des nanomatériaux selon l'invention.

En effet, la capacité d'adsorption et la capacité de photodégradation de composés, par exemple de composés organiques, sont supérieures à celles de dioxyde de titane commercial, notamment du TiO₂ PC50, commercialisé par Millenium, ou du TiO₂ Degussa P25, commercialisé par Degussa, et à celles de dioxydes de titane calcinés à 550°C. Les essais effectués par les inventeurs sur des colorants de différentes structures ont ainsi mis en évidence que les performances d'adsorption de molécules de colorant ainsi que les performances de destruction photocatalytique sont nettement supérieures avec les nanomatériaux selon l'invention comparées aux dioxydes de titane commerciaux et aux dioxydes de titane calcinés à 550°C. Des résultats encourageants ont également été obtenus sur des pesticides, des hydrocarbures et de saccharides.

Il est ainsi possible, de piéger un ou plusieurs composés, notamment organiques, comme par exemple un ou plusieurs colorants organiques, via leur adsorption à la surface dudit nanomatériau, et éventuellement de le récupérer ensuite. Pour récupérer le ou les composés, on peut par exemple sécher le nanomatériau et le traiter avec de l'éthanol pour désorber le ou les composés, notamment organiques qui se trouve(nt) alors en solution dans l'éthanol. Il est également possible de détruire, sous rayonnement, notamment dans le domaine du visible, par exemple à la lumière solaire ou halogène, ou de l'UV, le ou les composés adsorbés. Le temps nécessaire à la destruction du ou des composés sous rayonnement dépendra de la nature de ce ou ces dernier(s) et sera facilement déterminée par l'homme du métier.

Un objet de l'invention concerne ainsi également l'utilisation d'un nanomatériau selon l'invention pour piéger un ou plusieurs composés par adsorption à la surface du nanomatériau. Les composés sont de préférence choisis parmi les composés organiques, de préférence encore parmi les colorants, les principes actifs pharmaceutiques, les pesticides, les hormones, les saccharides, tels que le glucose, et/ou les hydrocarbures, de préférence encore parmi les colorants, les pesticides, les fongicides, les saccharides, tels que le glucose, et les hydrocarbures, de préférence encore parmi les colorants.

Selon une variante, le ou les composés sont piégés pour être récupérés ensuite. Comme évoqué ci-dessus, pour faire ceci, on peut par exemple sécher le nanomatériau et le traiter avec un solvant approprié. L'homme du métier saura choisir le solvant en fonction du ou des composés à désorber. Ainsi, il pourra par exemple utiliser un solvant organique polaire, tel qu'un alcool, comme par exemple de l'éthanol pour désorber le ou les composés, notamment organiques qui se trouvent alors en solution dans le solvant.

L'invention concerne également un procédé pour piéger un ou plusieurs composés, notamment organiques, par adsorption à la surface d'un nanomatériau selon l'invention par mise en contact dudit nanomatériau avec une solution contenant le ou les composés de façon à les adsorber à la surface du nanomatériau. Le nanomatériau ayant adsorbé le ou les composés peut ensuite être séparé de la solution initialement contenant le ou les composés et éventuellement séchés.

Selon une variante de ce procédé, le ou les composés sont piégés pour être récupérés ensuite. Cette récupération peut par exemple consister à désorber le ou les composés, notamment organiques an traitant le nanomatériau ayant adsorbé ce ou ces composés avec de l'éthanol et séparer la solution d'éthanol contenant le ou les composés du nanomatériau.

Les composés sont de préférence choisis parmi les composés organiques, de préférence encore parmi les colorants, les principes actifs pharmaceutiques, les pesticides, les hormones, les saccharides, tels que le glucose, et/ou les hydrocarbures, de préférence encore parmi les colorants, les pesticides, les fongicides, les saccharides, tels que le glucose, et les hydrocarbures, de préférence encore parmi les colorants.

Un objet de l'invention concerne également l'utilisation d'un nanomatériau selon l'invention pour la dégradation photocatalytique de composés, lesdits composés étant de préférence choisis parmi les composés organiques, de préférence encore parmi les colorants, les principes actifs pharmaceutiques (par exemple les antibiotiques, notamment de la famille des pénicillines, tel que l'ampicilline), les herbicides, les pesticides, les fongicides, les hormones, les saccharides, tels que le glucose, et/ou les hydrocarbures, de préférence encore parmi les colorants, les antibiotiques, les herbicides, les pesticides, les fongicides, les saccharides, tels que le glucose, et les hydrocarbures, de préférence encore parmi les colorants, les antibiotiques, les herbicides, les saccharides, tels que le glucose, et les hydrocarbures, de préférence encore parmi les colorants.

De plus, un procédé de dégradation photocatalytique de composés, notamment de composés organiques est divulgué comprenant la mise en contact d'un nanomatériau selon l'invention avec une solution contenant le ou les composés à détruire et l'exposition de l'ensemble à un rayonnemment UV et/ou visible de façon à détruire les composés adsorbés à la surface du nanomatériau. Le temps nécessaire à la destruction du ou des composés sous rayonnement dépendra de la nature de ce ou ces dernier(s) et sera facilement déterminée par l'homme du métier.

Naturellement, d'autres modes de réalisation de l'invention auraient pu être envisagés par l'homme du métier sans pour autant sortir du cadre de l'invention définie par les revendications ci-après.

Des exemples non limitatifs de réalisation de l'invention sont décrits ci-après.

### FIGURES

**Figure 1** **:** Spectres IRTF obtenus de nanomatériaux hybrides Ti/SiO₂ dont le tensioactif a été extrait selon le procédé de l'invention (« L ») en utilisant du nitrate de zinc (II).
**Figure 2** **:** Spectres IRTF obtenus de nanomatériaux à base d'oxyde de titane élimination du tensioactif (« NC ») et dont le tensioactif a été extrait selon le procédé de l'invention (« L »).
**Figure 3** **:** Spectres IRTF obtenus de nanomatériaux à base d'oxyde de titane et dont le tensioactif a été extrait selon le procédé de l'invention (« L ») en utilisant du nitrate de zinc (II), du nitrate de nickel (II) et du nitrate de cuivre (II), respectivement.
**Figure 4A** **:** Isothermes d'absorption volumétrique d'azote, représentant le volume adsorbé en fonction de P/P0 (pression/pression de vapeur saturante), de différents oxydes hybrides Ti/SiO₂ dont le tensioactif a été extrait par le procédé selon l'invention (Ti/SiO₂ 85/15%, Ti/SiO₂ 90/10%, Ti/SiO₂ 95/5%).
**Figure 4B** **:** Isothermes d'absorption volumétrique d'azote, représentant le volume adsorbé en fonction de P/P0 (pression/pression de vapeur saturante), d'un dioxyde de titane dont le tensioactif a été extrait par calcination (TiO₂ C), ou par le procédé selon l'invention (TiO₂ L).
**Figure 5A** **:** Image de microscopie électronique par transmission de TiO₂ L Zn²⁺.
**Figure 5B** **:** Image de microscopie électronique par transmission de TiO₂ C.
**Figure 6A** **:** Graphs de l'analyse thermogravimétrique (ATG) de TiO₂ C, TiO₂ L Zn²⁺, TiO₂ L Ni²⁺, TiO₂ L Cu²⁺.
**Figure 6B** **:** Graphs de l'analyse thermogravimétrique (ATG) de Ti/SiO₂ 85/15%, Ti/SiO₂ 90/10%, Ti/SiO₂ 95/5% et TiO₂ L Zn²⁺.
**Figure 7A** **:** Image de microscopie à balayage de TiO₂-100% L Zn²⁺.
**Figure 7B** **:** Image de microscopie à balayage de Ti/SiO₂ 95/5%.
**Figure 7C** **:** Image de microscopie à balayage de Ti/SiO₂ 90/10%.
**Figure 7D** **:** Image de microscopie à balayage de Ti/SiO₂ 85/15%.
**Figure 8** **:** Spectres d'absorption UV/visible de la Rhodamine B et de la dégradation photocatalytique de la Rhodamine B sous rayonnement d'un spot visible (300W) avec différents nanomatériaux selon l'invention et un dioxyde de titane commercial (PC50).
**Figure 9** **:** Spectres d'absorption UV/visible de la Rhodamine B et de la dégradation photocatalytique de la Rhodamine B sous rayonnement d'une lampe UV (λₘₐₓ = 365 nm, 12W) avec différents nanomatériaux selon l'invention et un dioxyde de titane commercial (PC50).
**Figure 10** **:** Spectres d'absorption UV/visible du méthylorange et de la dégradation photocatalytique du méthylorange sous rayonnement d'un spot visible (300W) avec différents nanomatériaux selon l'invention et un dioxyde de titane commercial (PC50).
**Figure 11** **:** Spectres d'absorption UV/visible de l'acide carminique et de la dégradation photocatalytique de l'acide carminique sous rayonnement d'un spot visible (300W) avec différents nanomatériaux selon l'invention et un dioxyde de titane commercial (PC50).
**Figure 12** **:** Spectres d'absorption UV/visible de l'acide fuschine et de la dégradation photocatalytique de l'acide fuschine sous rayonnement d'un spot visible (300W) avec différents nanomatériaux selon l'invention et un dioxyde de titane commercial (PC50).
**Figure 13** **:** Spectres d'absorption UV/visible du direct red 75 et de la dégradation photocatalytique du direct red 75 sous rayonnement d'un spot visible (300W) avec différents nanomatériaux selon l'invention et un dioxyde de titane commercial (PC50).
**Figure 14** **:** Spectres d'absorption UV/visible du calcomine organe et de la dégradation photocatalytique du calcomine organe sous rayonnement d'un spot visible (300W) avec différents nanomatériaux selon l'invention et un dioxyde de titane commercial (PC50).
**Figure 15** **:** Spectres d'absorption UV/visible du glyphosphate et de la dégradation photocatalytique du glyphosphate sous rayonnement d'un spot halogène visible (300W) avec différents nanomatériaux selon l'invention et un dioxyde de titane commercial (PC50).
**Figure 16A** **:** Spectre HPLC de l'ampicilline.
**Figure 16B** **:** Spectre HPLC de la dégradation photocatalytique de l'ampicilline après 5h sous rayonnement d'un spot halogène visible (300W) avec TiO₂-L Zn²⁺.
**Figure 17** **:** Spectres d'absorption UV/visible de l'acide perfluorooctanoïque et de la dégradation photocatalytique de l'acide perfluorooctanoïque sous rayonnement d'un spot halogène visible (300W) avec différents nanomatériaux selon l'invention et un dioxyde de titane commercial (PC50).
**Figure 18** **:** Isothermes d'absorption volumétrique d'azote, représentant le volume adsorbé en fonction de P/P0 (pression/pression de vapeur saturante), de différents oxydes hybrides Ti/SiO₂ dont le tensioactif a été extrait par le procédé selon l'invention (TiO₂-L Zn²⁺, Ti/ZrO₂ 95/5 Zn²⁺, ZrO₂-L Zn²⁺).
**Figure 19** **:** Spectres IRTF obtenus d'un oxyde hybride Ti/ZrO₂ 95/5 Zn²⁺, de TiO₂-L Zn²⁺ et de ZrO₂-L Zn²⁺.
**Figure 20** **:** Spectres IRTF obtenus de TiO₂ L Zn²⁺ recyclé et de TiO₂ L Zn²⁺.
**Figure 21A** **:** Spectres d'absorption UV/visible du bleu de bromophénol et de la dégradation photocatalytique du bleu de bromophénol sous rayonnement d'un spot visible (300W) avec différents nanomatériaux selon l'invention et un dioxyde de titane commercial (PC50).
**Figure 21B** **:** Spectres d'absorption UV/visible entre 500 nm et 700 nm du bleu de bromophénol et de la dégradation photocatalytique du bleu de bromophénol sous rayonnement d'un spot visible (300W) avec différents nanomatériaux selon l'invention et un dioxyde de titane commercial (PC50).
**Figure 22** **:** Spectres d'absorption UV/visible entre 500 nm et 700 nm du méthylorange et de la dégradation photocatalytique du méthylorange sous rayonnement d'un spot visible (300W) avec différents nanomatériaux selon l'invention et un dioxyde de titane commercial (P25).
**Figure 23** **:** Spectres d'absorption UV/visible entre 500 nm et 700 nm du méthylorange et de la dégradation photocatalytique du méthylorange sous rayonnement d'une lampe UV λₘₐₓ = 365 nm, 12W) avec différents nanomatériaux selon l'invention et un dioxyde de titane commercial (P25).
**Figure 24** **:** Spectres IRTF obtenus de nanomatériaux selon l'invention à base d'oxyde de titane synthétisé avec deux tensioactifs différents (Pluronic 123 et Brij 97).
**Figure 25** **:** Isothermes d'absorption de nanomatériaux selon l'invention à base d'oxyde de titane synthétisé avec deux tensioactifs différents (Pluronic 123 et Brij 97).

### EXEMPLES

### I. Préparation et analyse de nanomatériaux

Les analyses par spectrométrie, permettant d'identifier les différentes bandes significatives de liaisons spécifiques, ont été effectuées en utilisant un Spectromètre Infrarouge à Transformée de Fourier (IRTF) (Shimadzu). Cette méthode est appelée par la suite « spectrométrie IRTF ».

### EXEMPLE 1: Synthèse de dioxyde de titane comprenant un tensioactif.

A 50°C, 10g d'acide chlorhydrique 37% v/v sont mélangés à 50 g d'eau. 1,6 g de tensioactif Pluronic P123 sont introduits sous très forte agitation. Après deux heures d'agitation, 8,47 mL de Tetraisopropoxide de titane (ou isopropoxide de titane (TiPOT)) est ajouté. Ce précurseur étant très réactif en milieu aqueux, une précipitation a lieu spontanément. Par une forte agitation, le précipité se dissout très vite, avant qu'une nouvelle précipitation, issue de la polymérisation entre la structure tridimensionnelle issue de l'hydrolyse et la polycondensation du précurseur d'oxyde de titane et le réseau micellaire, n'apparaisse. Le mélange réactionnel est ensuite placé toujours à 50°C en conditions statiques pour 24h puis à 90°C pendant au moins 24h. La solution est alors filtrée. Le solide obtenu est rincé plusieurs fois avec un excès d'eau et séché à température ambiante.

### EXEMPLE 2 : Préparation de nanomatériaux à base d'oxyde de titane exempts de tensioactif par calcination. (pas selon l'invention)

Le tensioactif du nanomatériau préparé selon l'exemple 1 a été extrait selon une méthode d'extraction basée sur la calcination.

Selon cette méthode, 1g du nanomatériau contenant le tensioactif a été placé dans un creuset en céramique déposé dans un four tubulaire dont la température a été élevée jusqu'à 550°C en 10-15 minutes. La calcination a duré 16h. Après 5h de refroidissement pour revenir à température ambiante, le nanomatériau exempt de tensioactif a été récupéré et pesé.

Le nanomatériau à base d'oxyde de titane dont le tensioactif a été extrait selon cette méthode est aussi appelé par la suite « TiO₂ C ».

### EXEMPLE 3 : Préparation de nanomatériaux à base d'oxyde de titane exempts de tensioactif selon l'invention.

Le tensioactif du nanomatériau préparé selon l'exemple 1 a été extrait *in situ* selon l'étape d'élimination du tensioactif conforme à l'invention.

Pour ceci, une solution aqueuse de sel métallique bivalente d'une concentration de 0,05 mol/L a d'abord été préparée. Puis 200ml de cette solution ont été introduits dans un bêcher. Et le pH de cette solution a été ajusté à la valeur voulue (10,5 pour Cu²⁺ et Zn²⁺ et 11,5 pour Ni²⁺) par l'ajout d'une solution d'ammoniac à 35% v/v.

Plusieurs solutions aqueuses de sel métallique bivalent différentes ont été testées : une solution de nitrate de cuivre (II) trihydratée, de nitrate de nickel (II) et une solution de nitrate de zinc (II). A chaque solution basique de sel métallique, l'intégralité d'un milieu réactionnel (70,5 mL) en fin de synthèse du nanomatériau contenant le tensioactif selon l'exemple 1, c'est-à-dire avant filtration, rinçage et séchage, a ensuite été ajoutée et le mélange a alors été agité vigoureusement pendant 10 minutes à température ambiante puis filtré. Le solide obtenu a été rincé par un excès d'eau ultrapure et séché à température ambiante.

Afin d'enlever le métal précédemment greffé au nanomatériau, et par conséquent afin d'extraire totalement le tensioactif restant dans le nanomatériau, chélaté aux ions métalliques, le nanomatériau métallisé a été plongé dans une solution d'acide nitrique à 60% v/v (100 mg de matériau pour 5 mL de solution d'acide nitrique). Après 20 minutes de forte agitation, le milieu réactionnel a été centrifugé (5 minutes à 4500 tr/min dans une centrifugeuse Hettich Universai 320). Le nanomatériau obtenu a été lavé avec de l'eau puis séché durant une nuit à l'étuve à 50°C.

Les dioxydes de titane dont les tensioactifs ont été extraits selon cette méthode sont aussi appelés par la suite « TiO₂ L » suivi de l'ion métallique bivalent employé, par exemple TiO₂ L Zn²⁺ ou TiO₂ L Cu²⁺. La dénomination TiO₂ bis L Zn²⁺ est utilisée pour un deuxième échantillon pour lequel la synthèse selon les exemples 1 et 3 a été répétée afin de démontrer la reproductibilité du procédé selon l'invention.

### EXEMPLE 4 : Préparation de nanomatériaux à base d'oxydes hybrides titane-silicium exempts de tensioactif selon l'invention.

Ce protocole est identique à celui décrit pour le matériau TiO₂. 1,6 g de Pluronic P123 sont dissouts dans un mélange d'eau acide (10 g de HCl (37% v/v) et 50 g d'eau) à 50°C. Après 2 h d'agitation magnétique forte, des mélanges molaires de TIPOT/TEOS de respectivement 15/85 10/90 et 5/95 sont ajoutés. Une précipitation a lieu spontanément mais se dissout très vite. Après quelques heures, une nouvelle précipitation apparaît. Le mélange réactionnel est ensuite placé toujours à 50°C en conditions statiques pendant 24 h puis à 90°C pendant 24 h.

Les particules de solides étant tellement fines, plus de 70% d'entre elles passent à travers tous les systèmes de filtration. L'utilisation d'une centrifugeuse ne permet pas non plus de sédimenter ces particules. Ainsi, aucun solide contenant le surfactant ne peut être récupéré, donc aucune calcination ne peut être effectuée. Cette taille très fine des nanoparticules peut être interprétée comme un indice de cristallinité des nanomatériaux hybrides selon l'invention.

Une solution à ce problème est l'agglomération de ces particules par métallisation. Pour ce faire, la procédure de lavage doit être employée in situ après avoir refroidi le milieu réactionnel de 90°C à température ambiante. Une solution de sel métallique bivalent choisi parmi le nitrate de cuivre (II), le nitrate de nickel (II), et le nitrate de zinc (II) à 0,05 M et à un pH entre 10 et 12 est préparée.

Pour chaque matériau hybride Ti/SiO₂ (85/15, 90/10 et 95/5), 150 mL de la solution de sel métallique à 0,05 M et à pH entre 10 et 12 sont introduits dans un bêcher. Le milieu réactionnel est incorporé. Le pH de la solution chute alors brutalement dû à la présence d'acide dans le milieu réactionnel. L'ajout de quelques gouttes d'ammoniac permet de remonter le pH à la valeur voulue (10,5 pour Cu²⁺ et Zn²⁺ et 11,5 pour Ni²⁺).

Après 10 minutes d'agitation magnétique forte, les matériaux obtenus sont filtrés sous vide à l'aide d'un fritté à petite taille de pores, puis rincés à l'eau et séchés. La présence de mousse dans le filtrat indique l'élimination du surfactant. Les particules étant métallisées et agglomérées entre elles, aucune ne passe à travers du système de filtration.

La deuxième étape du lavage (démétallisation) est ensuite réalisée. Ainsi, pour 1 g de solide (vert avec du Cu²⁺, blanc avec Zn²⁺ et vert clair avec Ni²⁺), 50 mL d'acide nitrique pur sont utilisés pour la démétallisation. Après 20-30 minutes d'agitation magnétique forte, le milieu réactionnel est séparé équitablement dans deux tubes de 50 mL. Ces tubes sont alors placés dans une centrifugeuse à 5000 tours/minute pendant 5 minutes (centrifugeuse Hettich Universai 320). On remarque que le solide s'est sédimenté et que la solution est devenue limpide. Cette dernière est éliminée et remplacée par un même volume d'eau. Les tubes sont agités manuellement puis à nouveau placés dans la centrifugeuse à la même vitesse de rotation et pendant le même temps que précédemment.

Cette procédure est répétée jusqu'à ce que la solution centrifugée garde un léger trouble signifiant que des particules de matériaux restent en suspension. Au moins 3 centrifugations sont nécessaires pour procéder à un rinçage optimal.

Les solides obtenus sont séchés.

Les dioxydes hybrides titane-silicium selon l'invention sont aussi appelés par la suite « TiO₂ x/y% L Zn²⁺ » suivi du ou « TiO₂ x/y% L » ou x/y est le rapport molaire Ti/Si, par exemple TiO₂ 85/15% L Zn²⁺.

### EXEMPLE 5 : Analyses physico-chimiques des nanomatériaux

Les nanomatériaux préparés selon les exemples 1 à 4 et dont le tensioactif a été extrait selon le procédé de l'invention à l'aide d'une solution de nitrate de cuivre (II) (cf. exemples 3 et 4) ou par calcination (cf. exemple 2), ont été analysés afin de détecter les liaisons spécifiques présentes, la surface spécifique (Aₛ).

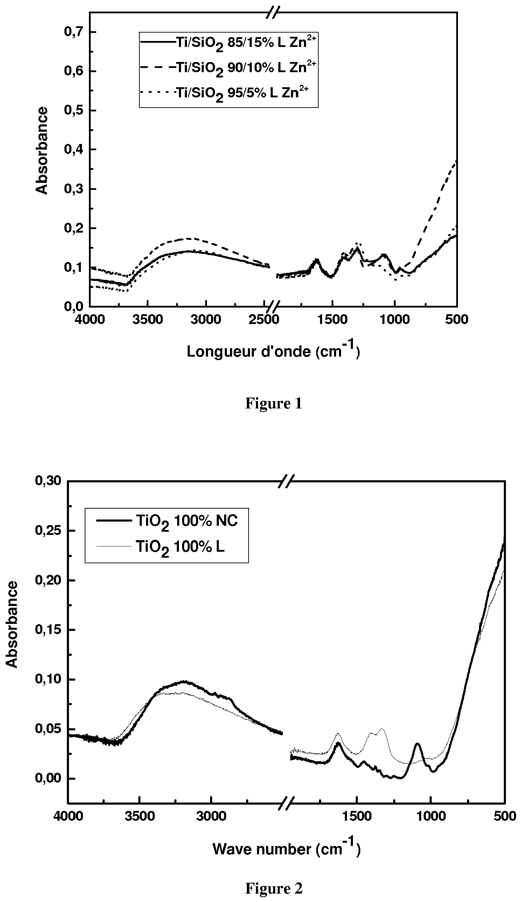

Les différentes bandes significatives de liaisons spécifiques ont été déterminées par spectrométrie IRTF. Les figures 1-3 présentent les spectres IRTF obtenus (TiO₂ NC signifie le matériau tel qu'obtenu à l'issu de l'exemple 1, c'est-à-dire avant élimination du tensioactif). L'absence des pics significatifs des liaisons C-H ou C-O vers 2700-2800cm-1 et dans la région 800-1400cm⁻¹ met en évidence l'élimination complète du tensioactif autant pour le dioxyde de titane calciné (TiO₂-C) que pour les matériaux selon l'invention. Pour les nanomatériaux selon l'invention, il est observé la présence de deux pics dans la région 1300-1400 cm⁻¹ par rapport aux nanomatériaux dont le tensioactif a été extrait par calcination. Cette caractéristique est de plus en plus prononcée en fonction de l'augmentation de la proportion de titane. Sans vouloir être liés par une quelconque théorie, les inventeurs pensent que la présence de ces bandes est due à la présence d'ions nitrates, qui rendent la surface du nanomatériau acide. En effet, une analogie peut être faite ici avec l'étude d'Enriquez et al. qui a mis en évidence l'acidification de la surface d'un oxyde de titane par l'utilisation de diverses quantités d'acide sulfurique [9]. Cette étude a révélé, après ces traitements, la présence d'une bande entre 1100 et 1200 cm⁻¹ caractéristique des liaisons du SO₄²⁻ et de plus en plus intense en fonction de la quantité d'acide. En outre, d'après cette étude, la réactivité photocatalytique de ces matériaux serait liée directement à l'acidité et à la présence des ions SO₄²⁻ [9]. De plus, les liaisons N-O doivent vibrer dans ces gammes de longueur d'onde.

La surface spécifique (Aₛ) a été déterminée par adsorption volumétrique d'azote. L'adsorption volumétrique est mesurée avec un dispositif Belsorp II Japan. Avant les mesures, les échantillons ont été dégazés à 373K à 10 Kpa pendant au moins 20h.

La surface spécifique est calculée à partir de la méthode de Brunnauer-Emmet-Teller (BET).

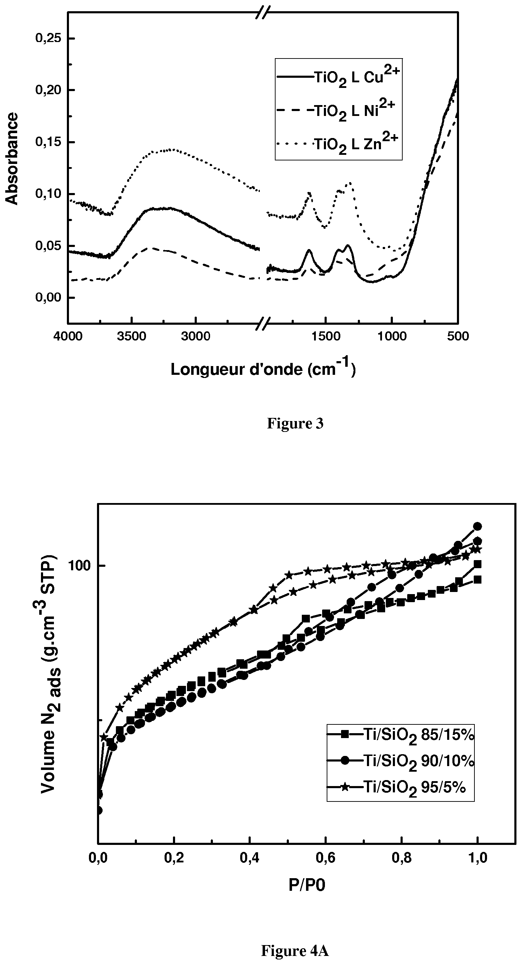

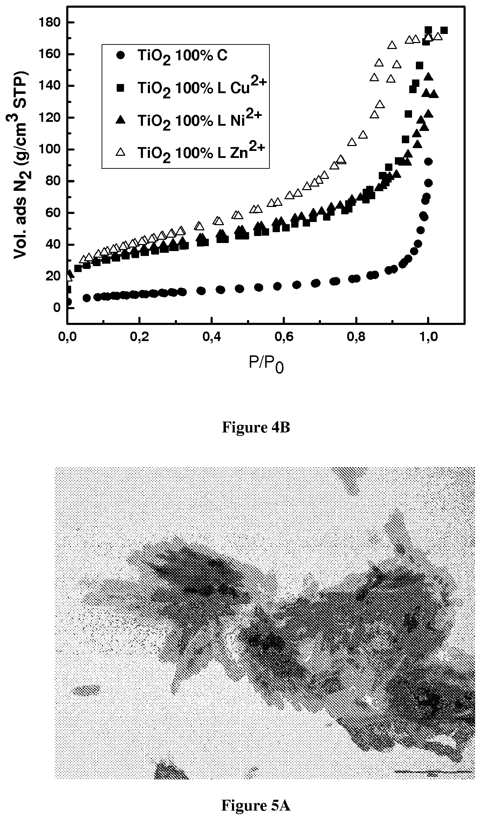

Les isothermes d'adsorption volumétrique d'azote, représentant le volume adsorbé en fonction de P/P0 (pression/pression de vapeur saturante), sont présentés aux figures 4A et 4B. Les résultats obtenus concernant la surface spécifique des nanomatériaux sont synthétisés dans le tableau 1.

**Tableau 1**

| **Matrice** | **surface spécifique (m²/g)** |
|---|---|
| **TiO₂ L (Cu²⁺)** | 124 |
| **TiO₂ L (Ni²⁺)** | 133 |
| **TiO₂ L (Zn²⁺)** | 153 |
| **TiO₂ C** | 32 |
| **Ti/SiO₂ L 85/15 %** | 207 |
| **Ti/SiO₂ L 90/10%** | 195 |
| **Ti/SiO₂ L 95/5%** | 249 |

Enfin, le type d'isotherme d'adsorption indique que nous sommes en présence d'isothermes caractéristiques de nanomatériaux non poreux.

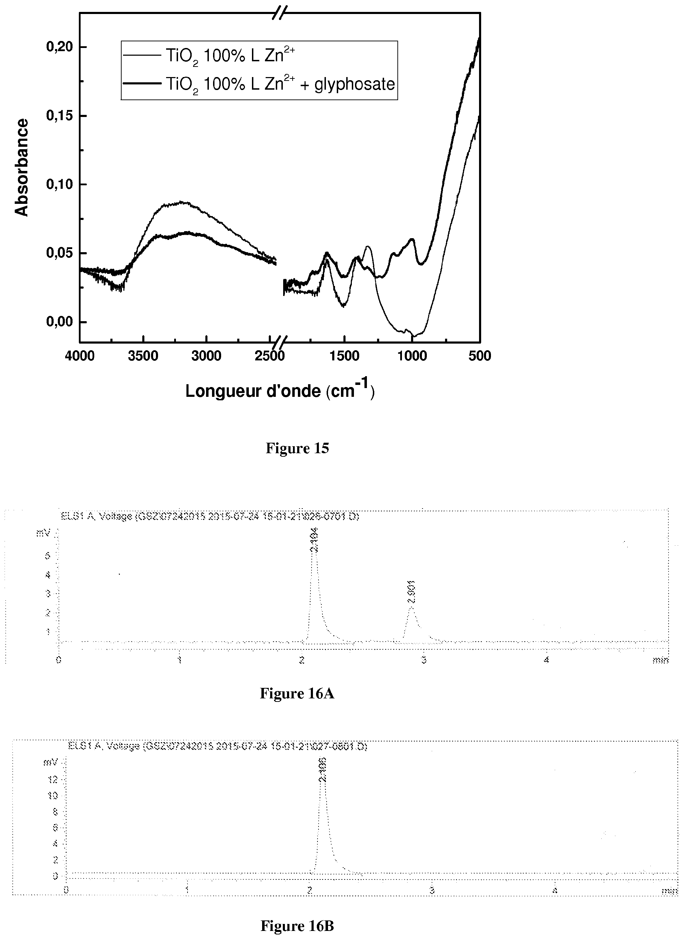

Par ailleurs, la surface spécifique et le nombre de groupements hydroxyles par nm² du nanomatériau dont le tensioactif a été extrait par le procédé selon l'invention sont supérieurs à ceux du nanomatériau dont le tensioactif a été extrait par calcination (cf. figures 15 et 16). Le nanomatériau dont le tensioactif a été extrait par le procédé selon l'invention a une plus grande perte d'eau, ce qui montre bien une plus grande surface mais aussi un plus grand nombre de groupement hydroxyle, puisque l'eau se lie au groupement OH par liaison hydrogène.

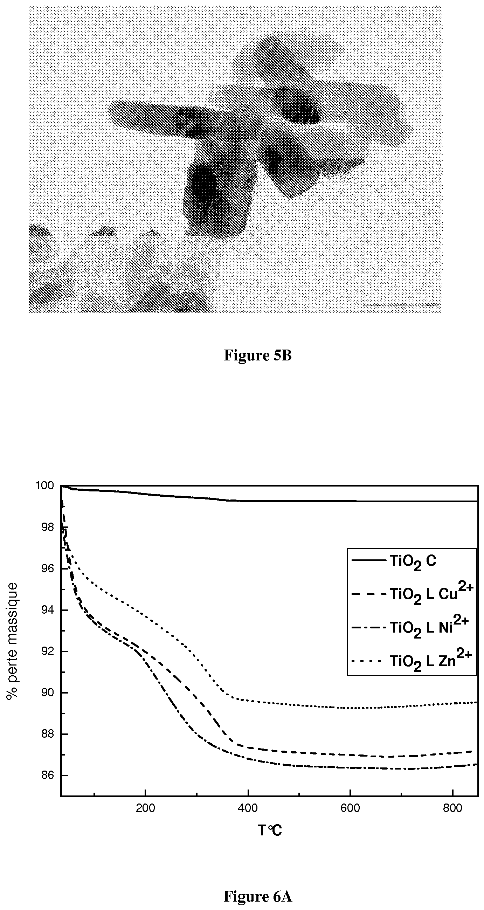

L'oxyde de titane dont le tensioactif a été extrait par le procédé selon l'invention (TiO₂ L ; Figure 5A) et l'oxyde de titane dont le tensioactif a été extrait par calcination (TiO₂ C ; Figure 5B) ont été observés par Microscope Electronique à Transmission (MET) sur un appareil JEOL JEM-100 CX II UHR.

Les images MET montrent une différence nette au niveau morphologie qui concorde parfaitement avec la différence entre les surfaces spécifiques. La calcination à 550°C agglomère les cristaux entre eux pour former de plus gros ensembles cristallins, diminuant la surface spécifique. Le procédé selon l'invention évite l'assemblage des cristaux.

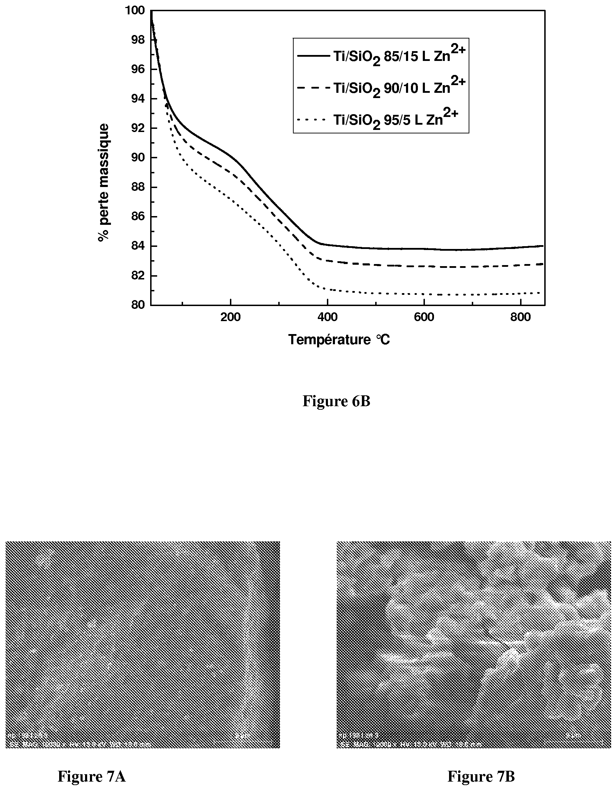

Le nombre de groupements hydroxyles des différents nanomatériaux a été déterminé par analyse thermogravimétrique (ATG), à partir de la perte massique au cours du chauffage. Cette analyse a été effectuée sur un dispositif TA Q 50. Les échantillons sont chauffés jusqu'à 850°C à une vitesse de 10°C/min. Deux semaines avant l'utilisation de l'ATG, les échantillons avaient été placés dans les mêmes conditions d'humidité. Les graphs sont présentés aux figures 6A et 6B et les résultats résumés dans le tableau 2 ci-dessous.

Concernant, l'analyse thermogravitométrique des échantillons, il est important de préciser que les échantillons ont été placés dans les mêmes conditions d'humidité pendant 4 jours avant l'analyse. Pour ceci, chaque échantillon est placé dans un pilulier et chaque pilulier est placé dans un grand récipient. Puis on ajoute un pilulier contenant de l'eau et on ferme le grand récipient et on le place dans une étuve à 25°C.

Ainsi, en regardant les résultats, on constate que la procédure de lavage renforce le nombre de groupement hydroxyles à la surface. La rupture de pente présente entre 200 et 400°C est une autre caractéristique. Elle corrobore avec les résultats de la spectrométrie IRTF et met en évidence la présence d'ions nitrates. A ce sujet, Cabo et al. confirment cette hypothèse en étudiant la décomposition de nitrate de cobalt et/ou de nickel par ATG [10]. Ainsi, les composés NOx se dégageraient sous forme gazeuse entre 200 et 400°C.

Etant donné qu'il est très difficile de séparer dans cette gamme de température les pertes massiques correspondant à la condensation des silanols et à celles correspondant aux dégagements de NOx, dans le tableau, le pourcentage d'azote des analyses élémentaire a servi de valeur de référence pour déterminer plus précisément le nombre de silanols.

**Tableau2**

| | **T (°C)** | **Ti/SiO₂ L 85/15%** | **Ti/SiO₂ L 90/10%** | **Ti/SiO₂ L 95/5 %** | **TiO₂ L 100% Cu** | **TiO₂ 100% C** | **TiO₂ L 100% Ni** | **TiO₂ L 100% Zn** |
|---|---|---|---|---|---|---|---|---|
| **Nombre de hydroxyles/nm²** | 400-700 | 1,3 | 1,4 | 1,1 | 1,6 | 0,6 | 2,5 | 1,7 |

Au vu des différentes courbes, le matériau lavé a une perte massique plus importante. Entre 100 et 200°C on observe une perte d'eau autour des nanomatériaux, entre 200 et 400°C une perte des éléments azotés et à partir de 400°C une perte d'eau due à la condensation des groupements OH.

**Tableau 3 Analyse élémentaire pour les nanomatériaux TiO₂ 100%**

| **Matrice** | %N | %C |
|---|---|---|
| **TiO₂ L (Cu²⁺)** | 1,1 | absence ou trace |
| **TiO₂ L (Ni²⁺)** | 0,6 | absence ou trace |
| **TiO₂ L (Zn²⁺)** | 0,8 | absence ou trace |
| **TiO₂ C** | nc | absence ou trace |
| **Ti/SiO₂ 85/15 L (Zn²⁺)** | 3,2 | absence ou trace |
| **Ti/SiO₂ 90/10 L (Zn²⁺)** | 1,8 | absence ou trace |
| **Ti/SiO₂ 95/5 L (Zn²⁺)** | 0,9 | absence ou trace |

### EXEMPLE 6 : Analyse par diffraction électronique de cristaux de dioxyde de titane (TiO₂ C et TiO₂ L Cu²⁺)

Les cristaux d'oxyde de titane (TiO₂ C et L Cu²⁺) ont été analysés par diffraction électronique pour déterminer leur structure cristalline. Plusieurs mesures de diffractions ont été effectuées. Les résultats sont présentés dans les tableaux 4 et 5 suivants. Certaines mesures ont permis l'étude de tous les plans.

**Tableau 4 : diffraction électronique de TiO₂ C**

| Diffraction | Aire (nm²) | Périmètre (nm) | Diamètre ext. max. | Distance interplans |
|---|---|---|---|---|
| TiO₂ C-4 | 4170,29 | 228,92 | 73,456 | **3,223** |
| TiO₂ C-4 | 9332,36 | 342,45 | 109,569 | **2,160** |
| TiO₂ C-4 | 15222,70 | 437,37 | 139,812 | **1,693** |
| TiO₂ C-4 | 20094,79 | 502,51 | 160,549 | **1,474** |
| TiO₂ C-4 | 6968,68 | 295,92 | 94,808 | **2,497** |
| TiO₂ C-4 | 24808,38 | 558,35 | 178,335 | **1,327** |
| TiO₂ C-4 | 37532,60 | 686,77 | 219,205 | **1,080** |
| | | | | |
| TiO₂ C-5 | 4238,37 | 230,78 | 74,049 | **3,197** |
| TiO₂ C-5 | 7323,71 | 303,37 | 97,189 | **2,436** |
| TiO₂ C-5 | 9536,34 | 346,18 | 110,759 | **2,137** |
| TiO₂ C-5 | 15877,37 | 446,68 | 142,772 | **1,658** |
| TiO₂ C-5 | 20543,82 | 508,10 | 162,314 | **1,458** |
| TiO₂ C-5 | 25307,03 | 563,93 | 180,130 | **1,314** |
| | | | | |
| TiO₂ C-6 | 4238,37 | 230,78 | 74,049 | **3,197** |
| TiO₂ C-6 | 7234,12 | 301,51 | 96,585 | **2,451** |
| TiO₂ C-6 | 9434,08 | 344,31 | 110,185 | **2,148** |
| TiO₂ C-6 | 16009,95 | 448,54 | 143,387 | **1,651** |
| TiO₂ C-6 | 20393,59 | 506,23 | 161,725 | **1,464** |
| TiO₂ C-6 | 25140,26 | 562,07 | 179,510 | **1,319** |
| | | | | |
| TiO₂ C-19 | 4170,29 | 228,92 | 73,456 | **3,223** |
| TiO₂ C-19 | 7234,12 | 301,51 | 96,585 | **2,451** |
| TiO₂ C-19 | 15877,37 | 446,68 | 142,772 | **1,658** |
| TiO₂ C-19 | 9846,45 | 351,76 | 112,531 | **2,104** |
| TiO₂ C-19 | 21303,23 | 517,40 | 165,288 | **1,432** |

**Tableau 5 : diffraction électronique de TiO₂ L**

| | | | | |
|---|---|---|---|---|
| TiO₂ L-3 | 4102,76 | 227,06 | 72,894 | **3,247** |
| TiO₂ L-3 | 6794,47 | 292,20 | 93,593 | **2,529** |
| TiO₂ L-3 | 8832,06 | 333,15 | 106,632 | **2,220** |
| TiO₂ L-3 | 15352,53 | 439,23 | 140,388 | **1,686** |
| TiO₂ L-3 | 19650,72 | 496,93 | 158,793 | **1,491** |
| TiO₂ L-3 | 23988,33 | 549,04 | 175,376 | **1,350** |
| TiO₂ L-3 | 33382,16 | 647,68 | 206,747 | **1,145** |
| TiO₂ L-3 | 36723,30 | 679,32 | 216,822 | **1,092** |
| | | | | |
| TiO₂ L-5 | 6881,29 | 294,06 | 94,166 | **2,514** |
| TiO₂ L-5 | 4170,29 | 228,92 | 73,456 | **3,223** |
| TiO₂ L-5 | 10161,51 | 357,34 | 114,368 | **2,070** |
| TiO₂ L-5 | 15613,85 | 442,96 | 141,613 | **1,672** |
| TiO₂ L-5 | 19357,43 | 493,21 | 157,590 | **1,502** |
| TiO₂ L-5 | 23664,17 | 545,32 | 174,165 | **1,359** |
| TiO₂ L-5 | 35724,07 | 670,02 | 213,881 | **1,107** |
| TiO₂ L-9 | 4102,76 | 227,06 | 72,894 | **3,247** |
| TiO₂ L-9 | 7145,09 | 299,65 | 95,975 | **2,466** |
| TiO₂ L-9 | 16009,95 | 448,54 | 143,387 | **1,651** |
| TiO₂ L-9 | 36522,35 | 677,46 | 216,261 | **1,095** |
| TiO₂ L-9 | 30383,10 | 617,90 | 197,309 | **1,200** |
| | | | | |
| TiO₂ L-12 | 3969,34 | 223,34 | 71,694 | **3,302** |
| TiO₂ L-12 | 7056,61 | 297,79 | 95,362 | **2,482** |
| TiO₂ L-12 | 9130,59 | 338,73 | 108,372 | **2,184** |
| TiO₂ L-12 | 10267,64 | 359,20 | 114,932 | **2,060** |
| TiO₂ L-12 | 15482,91 | 441,09 | 141,004 | **1,679** |
| TiO₂ L-12 | 20393,59 | 506,23 | 161,725 | **1,464** |
| TiO₂ L-12 | 23825,97 | 547,18 | 174,770 | **1,354** |
| | | | | |
| TiO₂ L-24 | 4170,29 | 228,92 | 73,456 | **3,223** |
| TiO₂ L-24 | 6881,29 | 294,06 | 94,166 | **2,514** |
| TiO₂ L-24 | 8832,06 | 333,15 | 106,632 | **2,220** |
| TiO₂ L-24 | 10161,51 | 357,34 | 114,368 | **2,070** |
| TiO₂ L-24 | 15352,53 | 439,23 | 140,388 | **1,686** |
| TiO₂ L-24 | 19066,35 | 489,48 | 156,381 | **1,514** |
| TiO₂ L-24 | 23664,17 | 545,32 | 174,165 | **1,359** |
| | | | | |
| TiO₂ L-29 | 4307,01 | 232,64 | 74,625 | **3,172** |
| TiO₂ L-29 | 7056,61 | 297,79 | 95,362 | **2,482** |
| TiO₂ L-29 | 8832,06 | 333,15 | 106,632 | **2,220** |
| TiO₂ L-29 | 10267,64 | 359,20 | 114,932 | **2,060** |
| TiO₂ L-29 | 15352,53 | 439,23 | 140,388 | **1,686** |
| TiO₂ L-29 | 20694,60 | 509,96 | 162,898 | **1,453** |
| TiO₂ L-29 | 23342,21 | 541,60 | 173,013 | **1,368** |
| TIO₂ L-29 | 34934,61 | 662,57 | 211,487 | **1,119** |

Au vu des résultats, il est démontré que quelque que soit la technique d'élimination du surfactant (calcination ou lavage) la structure cristalline n'est pas modifiée.

En comparant avec les abaques [11], les oxydes de titane synthétisés ont une structure 100% rutile.

### EXEMPLE 7 : Analyses des nanomatériaux par microscopie à balayage

Les nanomatériaux des Exemples 2 à 4 ont été analysés par microscopie à balayage (MEB-FEG JEOL 7100F).

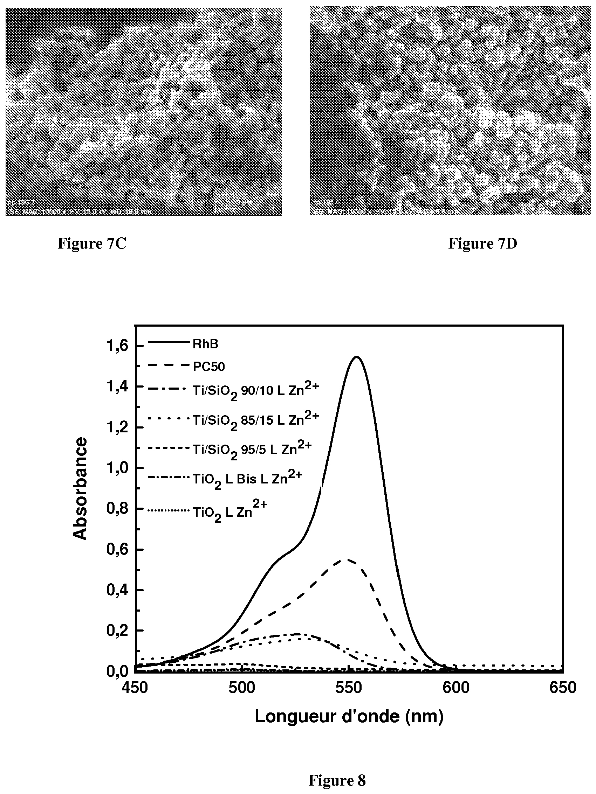

Les images de microscopie à balayage nous montrent les aspects différents entre les cristaux de TiO₂ 100% L (Figure 7A) et les hybrides de 95, 90 et 85 % TiO₂. (Figures 7B, 7C et 7D). Nous observons que les hybrides de 90 et 85% TiO₂ ont une forme de solide similaire. En revanche, l'hybride à 95% TiO₂ ne ressemble ni au TiO₂ à 100% ni aux hybrides à 90 et 85% TiO₂.

On observe également que la surface spécifique de l'hybride 95% TiO₂ est bien supérieure par rapport les autres hybrides et le TiO₂ 100%.

### EXEMPLE 8 : Photocatalyse de différents colorants

### a) Protocole expérimental

Des expériences en photocatalyse avec différents composés organiques ont été entreprises. Le protocole est identique pour toutes et se déroule comme suit. Une concentration de colorant de 0,03 mmol.L⁻¹ est préparée. Pour chaque échantillon, une concentration massique en matériaux TiO₂ ou hybrides Ti/SiO₂ de 1mg/ml a été utilisée. Après 15 minutes aux ultrasons pour une dispersion maximale des particules, les échantillons sont placés sous rayonnements d'un spot halogène (visible, 300W).

Les solutions ont été testées par spectrophotomètre UV Visible.

Pour une meilleure comparaison, des échantillons témoins (colorants seuls) et des échantillons avec TiO₂ commercial sont préparés. Ces derniers, appelé TiO₂ Millenium PC50 ou Degussa P25 sont composés respectivement de 99% anatase et 1% rutile et de 80% d'anatase et 20% rutile.

Sauf indication contraire, le matériau 100% TiO₂ utilisé dans les expériences de photocatalyse est celui traité avec les ions Zn²⁺ de l'exemple 3. Les matériaux hybrides utilisés sont ceux de l'exemple 4.

### b) Résultats et discussion

### • Rhodamine B (RhB)

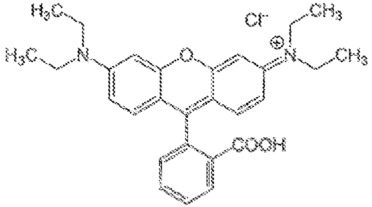

Les spectres d'absorption (après 5 h de rayonnement) montrent que l'augmentation de la part d'oxyde de titane dans les nanomatériaux selon l'invention accélère la cinétique de dégradation (Figure 8). Même si le matériau 100% oxyde de titane (TiO₂ L Zn²⁺) est le plus efficace, les matériaux hybrides sont supérieurs au matériau commercial PC50. Le même effet peut être observé à l'œil nu. La solution de Rhodamine B traitée avec le matériau PC 50 a toujours quasiment la couleur d'origine après 5 h de rayonnement tandis que les autres solutions montrent une décoloration significative voire totale pour le matériau TiO₂ L Zn²⁺.

### • Méthyl orange (MO)

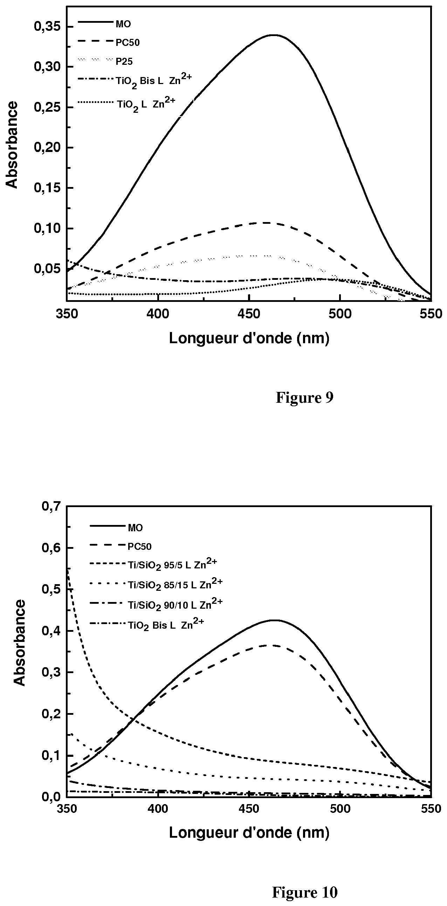

Ici aussi, les spectres d'absorption (après 5 h de rayonnement) montrent que l'augmentation de la part d'oxyde de titane accélère la cinétique de dégradation (Figure 10). Même si le matériau 100% oxyde de titane est le plus efficace, les matériaux hybrides sont supérieurs au matériau commercial PC50. L'objectif est ainsi atteint. Une autre information importante est mise en évidence. La couleur des solutions de Méthylorange avant rayonnement (t=0) confirme l'hypothèse d'une acidification de la surface. Ce composé appelé aussi hélianthine est connu pour être un indicateur coloré dans les dosages acido-basiques. Les mêmes effets peuvent être observés à l'œil nu. La solution de Méthyl orange traitée avec le matériau PC 50 a toujours quasiment la couleur d'origine après 5 h de rayonnement tandis que les autres solutions montrent une décoloration significative voire totale pour les matériaux TiO₂ L Zn²⁺ et Ti/SiO₂ L 90/10%.

Des essais ont été effectués à l'aide d'un rayonnement UV λₘₐₓ = 365 nm, 12W) pendant 5h h. Ces essais ont également mis en évidence la supériorité des matériaux 100% TiO₂ selon l'invention (Figure 9).

### • Bleu de Bromophénol (BBP)

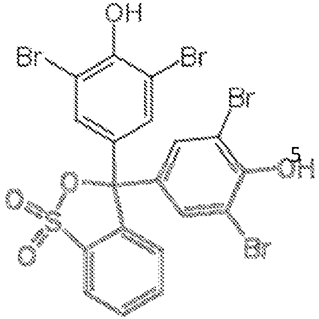

L'hypothèse de l'acidité de la matrice lavée ne fait plus aucun doute, la solution de BBP passe du bleu au vert au contact du matériau selon l'invention. La poudre devient bleue, ce qui est synonyme d'adsorption des molécules de colorant sur la surface. Parallèlement, pour ce colorant, aucun de ces phénomènes n'est observé pour l'échantillon commercial.

Après rayonnement avec une lampe halogène pendant 6h l'absorbance à 610 nm des différents échantillons a été mesurée. Les résultats son récapitulés au tableau 6 ci-dessous.

**Tableau 6**

| Absorbance après 6h | |
|---|---|
| Echantillon | Absorbance |
| BBP seul | 1,917 |
| TiO₂ L **Cu²⁺** | 0,060 |
| TiO₂ L **Ni²⁺** | 0,030 |
| TiO₂ L **Zn²⁺** | 0,012 |
| TiO₂ com (PC50) | 0,220 |
| TiO₂ C | 1,820 |

Au vu des résultats du tableau, la calcination annihile la photocatalyse, sans doute la diminution de la surface spécifique et du nombre de groupement hydroxyle en est responsable. L'efficacité des matériaux selon l'invention par rapport au matériau commercial est confirmée.

Ainsi, deux propriétés du matériau TiO₂ lavé ont été observées : le piégeage par adsorption des composés organiques sur la surface puis leur destruction par photocatalyse.

Pour cette dernière, il a également été constaté une accélération de la photodégradation avec les ions Ni²⁺ et encore plus avec les ions Zn²⁺ par rapport aux ions Cu²⁺ utilisés dans la première étape du lavage. On constate que malgré le changement de sel métallique, la décoloration de la solution de BBP apparaît encore lors du contact avec les matériaux.

### • Acide carminique

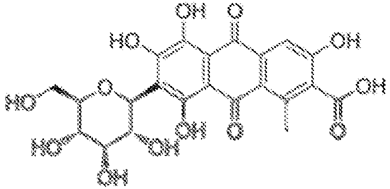

Des essais de photocatalyse avec une lampe halogène ont été effectués pour les matériaux suivants : TiO₂ L Zn²⁺, Ti/SiO₂ L 85/15%, Ti/SiO₂ L 90/10%, Ti/SiO₂ L 95/5% et PC50. Une décoloration de chaque solution est observée au bout d'1h10.

Les solutions sont analysées au spectrophotomètre UV-visible après 5h de rayonnement, dans chaque cas l'absorbance est « nulle », aucun pic n'est détecté à la longueur d'onde maximale de l'acide carminique (527 nm). La solution contenant le matériau 100% TiO₂ selon l'invention présente une courbe d'absorbance plus élevée que le colorant seul due à la diffusion de particules de TiO₂ passées à travers le filtre-seringue, mais aucun épaulement n'est observé. La seule différence entre tous les échantillons se situe au niveau de la coloration de la poudre après filtration : très coloré pour le matériau commercial à de moins en moins en augmentant la quantité de TiO₂ pour les échantillons selon l'invention jusqu'à être absente de la matrice contenant 100% d'oxyde de titane. Il semblerait donc que la photocatalyse soit complète pour ce dernier matériau.

Une décoloration de chaque solution est observée au bout d'1h10.

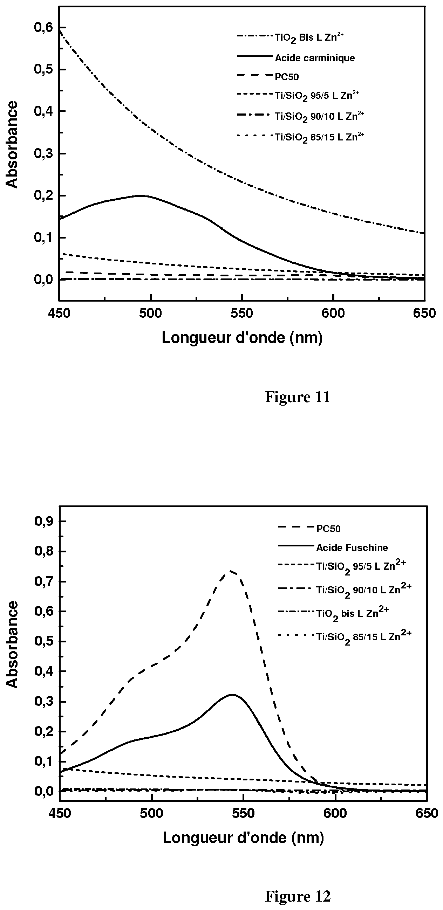

Les solutions sont analysées au spectrophotomètre UV-visible après 5h de rayonnement (Figure 11), dans chaque cas l'absorbance est « nulle », aucun pic n'est détecté à la longueur d'onde maximale de l'acide carminique (527 nm). La solution contenant le matériau 100% TiO₂ présente une courbe d'absorbance plus élevée que le colorant seul due à la diffusion de particules de TiO₂ passées à travers le filtre-seringue, mais aucun épaulement n'est observé. La seule différence entre tous les échantillons se situe au niveau de la coloration de la poudre après filtration : très coloré pour le matériau commercial à de moins en moins en augmentant la quantité de TiO₂ pour les échantillons lavés jusqu'à être absente de la matrice contenant 100% d'oxyde de titane.

Il semblerait donc que la photocatalyse soit complète pour ce dernier matériau.

### • Acide Fuschine

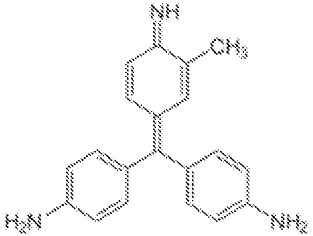

Une décoloration pour les solutions contenant les matériaux selon l'invention est observée. Elle est beaucoup plus visible pour l'échantillon contenant 90% de TiO₂. A t=6h, toutes les solutions sont complètement décolorées, seule la solution contenant le matériau PC50 n'a pas changé.

Les solutions sont analysées avec le spectrophotomètre UV-visible après 6h de rayonnement (lampe halogène), les spectres obtenus confirment la tendance (Figure 12). Seul le matériau commercial n'a pas dégradé les molécules d'acide fuschine. Même si le TiO₂ 90% a dégradé plus vite, il semblerait que la matrice contenant 100% d'oxyde de titane soit au final plus efficace, la poudre récupérée n'étant pas colorée par rapport aux autres.

### • Direct red 75 :

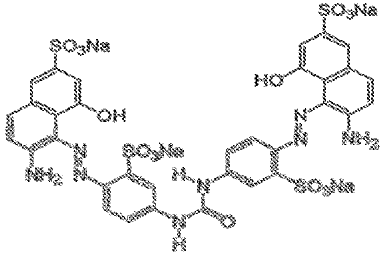

En 3h, toutes les solutions se sont décolorées. Toutefois, les matériaux selon l'invention sont tous supérieurs au PC50.

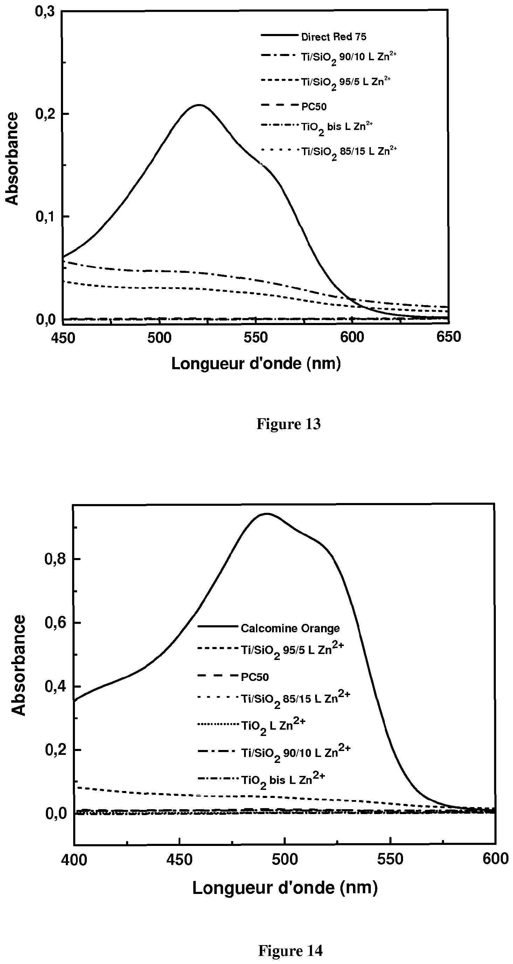

Les solutions sont analysées avec le spectrophotomètre UV-visible après 3h de rayonnement (lampe halogène). Les spectres obtenus confirment la tendance (Figure 13).

### • Calcomine Orange

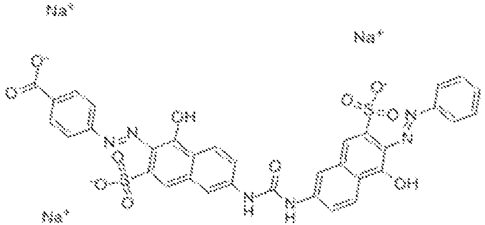

Une décoloration pour les solutions contenant les matériaux selon l'invention est observée. Les meilleurs résultats sont toutefois obtenus avec le TiO₂ L Zn²⁺ de l'exemple 3.

Les solutions sont analysées avec le spectrophotomètre UV-visible après 3h30 de rayonnement (lampe halogène), les spectres obtenus confirment la tendance (Figure 14).

Lors de l'exposition au rayonnement (lampe halogène), la solution de calcomine orange avec du TiO₂ L Zn²⁺ est la première à s'éclaircir mais la poudre récupérée après filtration et rinçage ne présente qu'une très faible coloration. Pour les autres matériaux, les poudres sont toutes colorées, ce qui signifie que des molécules de colorants se sont adsorbées à la surface. Le matériau hybride Ti/Si 85/15% montre le pouvoir adsorbant le plus important de tous les matériaux hybrides. En effet, il est observé une forte sédimentation dans le pilulier rendant la solution limpide. Il semblerait également que le matériau commercial ne dégrade pas les molécules mais ne fait que les adsorber.

En conclusion, l'action conjointe de la méthode de synthèse et du procédé de lavage produit un type d'oxyde de titane cristallin rutile hautement réactif pouvant soit détruire les composés polluants, soit les adsorber (avec possible relargage).

### EXEMPLE 9 : Autres composés organiques

### • Glyphosate :

Quelques essais ont été effectués en laboratoire en utilisant du TiO₂ L Zn²⁺ de l'exemple 3 pour piéger une solution de glyphosate dans l'eau d'une concentration à 0,1mg/mL (herbicide connu mondialement sous le nom de Round-Up®) sans l'aide d'un rayonnement. Il semblerait que ces composés se soient adsorbés à la surface. En effet, en solution aqueuse, les particules de TiO₂ restent en suspension même en cas de centrifugation. Or, au contact des composés organiques, il est observé une sédimentation des particules signifiant que ces dernières se sont agglomérées ou alourdies. L'hypothèse est confirmée par l'étude du spectre IRTF (Figure 15). Les deux courbes sont très semblables, sauf, la diminution en absorbance de la bande caractéristique des liaisons N-O signifiant l'adsorption d'un composé sur la surface, et l'apparition de pics assez intense entre 1100 et 1000 cm⁻¹ et dans la région de 1600 cm⁻¹ significatifs des liaisons d'un groupement acide carboxylique et un peu plus faible vers 2500 cm⁻¹ signification des liaisons d'un acide phosphonique.

### • Ampicilline :

De la même manière, des molécules d'ampicilline (antibiotique de la famille des pénicillines) à une concentration massique dans l'eau de 0,1mg/ml ont été détruites par photocatalyse par le TiO₂ L Zn²⁺ de l'exemple 3 (voir résultats HPLC : Figures 16A et 16B). En effet, au niveau du signal du détecteur ELSD (diffusion de la lumière), le pic de l'ampicilline sort à environ 2,9 min et ce malgré le rayonnement (le pic d'injection sortant à 2,1min). Or, après 5h de rayonnement en présence de TiO₂ L Zn²⁺, ce pic caractéristique a disparu, signifiant l'élimination complète des molécules d'ampicilline.

### • Hydrocarbures :

Un essai a été effectué en utilisant du TiO₂ L Ni²⁺ de l'exemple 3 pour dégrader une solution constituée de 50 % (v/v) d'hydrocarbures (octane/1,3,5 triméthylbenzène) et de 50% (v/v) d'eau de mer salée.

De la même façon que pour le glyphosate, il a été observé que, même si des particules de TiO₂ L Ni²⁺ restent en suspension en phase aqueuse (aspect laiteux), une grande quantité des particules sédimentent à l'interface entre la phase aqueuse et la phase organique après contact entre le nanomatériau et la solution d'hydrocarbures et d'eau de mer. Des molécules d'hydrocarbures se sont donc adsorbées à la surface du nanomatériau. Ceci a par ailleurs été confirmé après filtration de l'échantillon : 2,5 ml d'hydrocarbures par 10 mg de nanomatériau ont ainsi été piégés.

### • Glucose :

Pour cette expérience, la concentration de glucose est de 0,5mg/mL et la concentration de matériau est identique 1mg/mL (solvant : eau).

Une gamme de concentration en glucose a été préparée. Ces concentrations sont déterminées par spectrométrie UV Visible après l'ajout de 1mL de liqueur de Fehling. En effet, à chaud, en présence d'une substance réductrice (ici le glucose), la liqueur de Fehling donne un précipité rouge d'oxyde de cuivre Cu₂O (cuivre I). Ainsi, la bande d'absorbance du Zn²⁺ vers 660 nm se réduit de plus en plus à mesure que la concentration de glucose augmente.

Ainsi, le matériau TiO₂ L Zn²⁺ a réduit la concentration de glucose en solution de moitié.

### • Acide perfluorooctanoïque :

L'acide perfluorooctanoïque (PFOA) est un tensioactif fluoré synthétique (n'existant pas dans la nature). Il est très stable et pour cette raison extrêmement persistant (quasi-indéfiniment) dans l'environnement. En raison du cumul, de sa toxicité et de sa persistance, il est classé en Europe dans le cadre du règlement Reach comme substance extrêmement préoccupante.

Le protocole expérimental est le suivant : concentration en composé organique 0,1 mg/mL, concentration en TiO₂ L Zn²⁺ 1 mg/mL (solvant eau), 15 minutes dans un bain à ultrason pour disperser les particules en solution, 3 heures de rayonnement halogène. L'échantillon est alors filtré pour séparer le matériau de la solution. Le solide retenu est rincé avec de l'eau puis séché à température ambiante et analysé par spectrométrie infrarouge à Transformée de Fourier (IRTF).

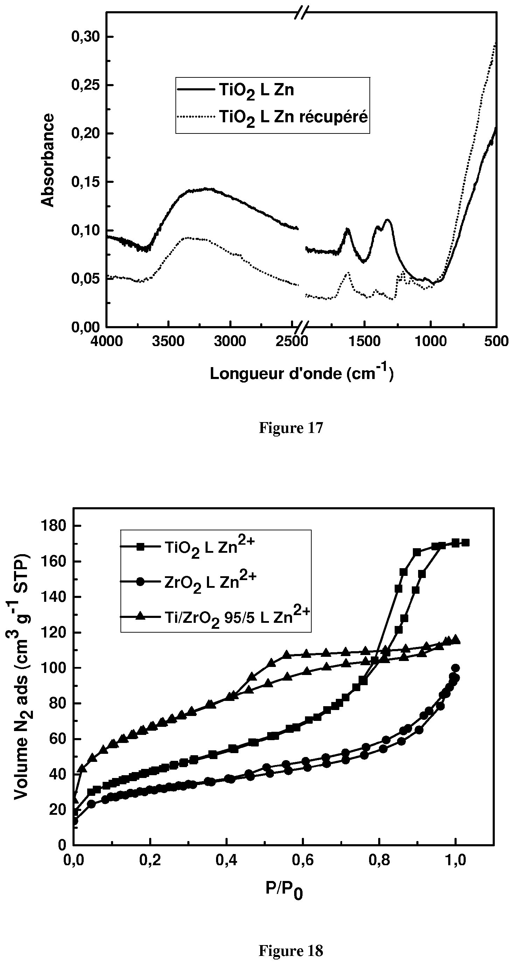

Le spectre IRTF du matériau TiO₂L Zn²⁺ récupéré à la fin de l'expérience diffère beaucoup du spectre IRTF du matériau TiO₂ L Zn²⁺ (Figure 17). La bande correspondant aux liaisons N-O a disparu du spectre du matériau récupéré confirmant une adsorption de molécules organiques sur la surface. Plusieurs pics sont apparus également entre 1000 et 1500 cm⁻¹, vers 2700 cm⁻¹ et le pic caractéristique de l'eau (1600 cm⁻¹) semble plus large et présente un épaulement. Tous ces pics correspondent aux vibrations des liaisons C-F, C-C et des groupements acides carboxyliques (C-O, C=O, O-H).

Il est ainsi démontré que des molécules de PFOA se sont adsorbées.

En conclusion et comme démontré notamment aux exemples 8 et 9, l'action conjointe de la méthode de synthèse et du procédé de lavage produit un type d'oxyde de titane cristallin rutile hautement réactif pouvant soit détruire les composés polluants, soit les adsorber (avec possible relargage).

Cette caractéristique est assez discutée dans la littérature actuelle. Il semblerait que l'adsorption soit favorisée par l'utilisation d'oxydes de titane commerciaux fonctionnalisés (carbone, polymère) [12,13]. Concernant, les matériaux TiO₂ non fonctionnalisés, l'adsorption dépendrait du pH. A ce sujet, les meilleurs résultats d'adsorption seraient obtenus en acidifiant modérément la solution d'adsorbant (pH=3) [14].

Néanmoins, l'oxyde de titane présentement synthétisé reste compétitif au niveau de sa synthèse, de son coût environnemental et semble avoir des propriétés d'adsorption supérieures.

### EXEMPLE 10 : Synthèse d'un matériau hybride Ti/ZrO₂ selon l'invention

Un nanomatériau hybride Ti/ZrO₂ a été synthétisé selon le mode opératoire de l'exemple 4 en remplaçant le précurseur de silicium (TEOS) par du propoxyde de zirconium dans 70% de propanol (le propanol est évaporé avant l'ajout du précurseur dans le milieu réactionnel) et en utilisant une solution de nitrate de zinc pour la première étape de lavage. Ce matériau est constitué de 95% en moles de TiO₂ et de 5 % en moles de ZrO₂ et appelé Ti/ZrO₂ 95/5 (Zn) pour la suite.

### EXEMPLE 11 : Analyse physico-chimique du Ti/ZrO₂ 95/5 (Zn)

La surface spécifique (Aₛ) a été déterminée par adsorption volumétrique d'azote telle que décrite à l'exemple 5 pour les matériaux suivants : TiO₂ L Zn²⁺, ZrO₂ L Zn^{2+,}, Ti/ZrO₂ 95/5 (Zn). Le ZrO₂ L Zn²⁺ a été préparé de façon analogue au TiO₂ L Zn²⁺ avec du propoxyde de zirconium dans 70% de propanol comme précurseur de zirconium (le propanol est évaporé avant l'ajout du précurseur dans le milieu réactionnel).

Comme le montrent les isothermes d'adsorption, la surface spécifique de ZrO₂ est moins importante que celle du TiO₂ mais 5% ZrO₂ ajoutés à 95% de TiO₂ donne un matériau (Ti/ZrO₂ 95/5 (Zn)) avec une surface spécifique bien plus importante que le matériau 100% de TiO₂ L Zn²⁺ (Figure 18).

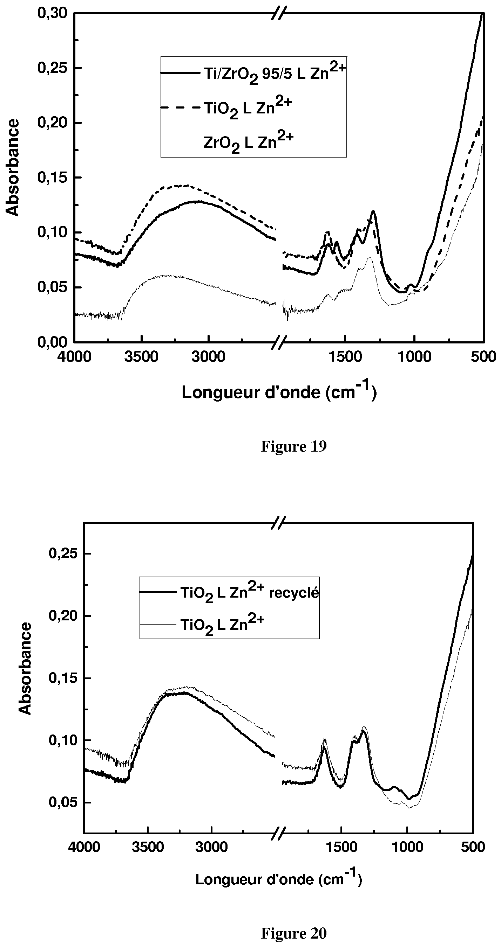

Le même phénomène sur la surface est observé sur les spectres IRTF (Figure 19) entre 1000 et 1800cm⁻¹. Les matériaux TiO₂ L Zn²⁺ et Ti/ZrO₂ 95/5 (Zn) présentent les mêmes pics aux mêmes intensités. Tandis que même si le matériau présente les mêmes pics, leur intensité est beaucoup plus faible.

Pour rappel, les bandes entre 1300 et 1400 cm⁻¹ sont caractéristiques de la liaison N-O des ions NO₃⁻ adsorbés responsables de l'acidification de la surface. Comme il a déjà été relaté précédemment, cette acidification améliorerait les propriétés photocatalytiques des matériaux.

Le pic vers 1600cm⁻¹ est caractéristique des vibrations des molécules d'eau.

### EXEMPLE 12 : Recyclage TiO₂ L Zn²⁺

Un bon photocatalyseur se doit d'être efficace pour l'élimination de composés organiques, ce qui a été démontré précédemment. Mais il se doit également d'être recyclable et réutilisable plusieurs fois sans diminution de son efficacité.

Pour démonter la capacité de TiO₂ L Zn²⁺ à être recyclé et réutilisé, la poudre récupérée en fin de photocatalyse (Exemple 8 : bleu de bromophénol) est rincée par un excès d'éthanol absolu. Après centrifugation, le surnageant est éliminé. La poudre est alors placée dans une solution d'acide nitrique 10% pour détruire les molécules de colorant résiduelle mais surtout rétablir l'acidité de la surface qui semblerait s'être réduite à la fin de la photocatalyse précédente. La centrifugation, à cet instant, est très difficile. Une partie du matériau recyclé reste en suspension. Le surnageant est éliminé et l'autre partie du matériau sédimentée est séchée à température ambiante.

La Figure 20 regroupe le spectre du matériau recyclé comparé au spectre du matériau de base. Les spectres sont similaires. Le recyclage ne semble pas détruire le matériau.

### EXEMPLE 13 : Photocatalyse avec TiO₂ L Zn²⁺ recyclé et Ti/ZrO₂ L Zn²⁺

### a) Protocole expérimental

Les matériaux TiO₂ L Zn²⁺ recyclé et Ti/ZrO₂ 95/5 L Zn²⁺ ont testé en photocatalyse pour dégrader des colorants. Dans le but de comparer leur efficacité, les matériaux TiO₂ L Zn²⁺ et les oxydes de titane commerciaux (PC50 et P25) par la procédure de lavage ont également été utilisés. Il est important de noter que les oxydes de titane commerciaux utilisés jusqu'à présent étaient purs. Ces dernières années, des ions métalliques sont apportés en très faible quantité au sein de ces matériaux pour augmenter leur réactivité photocatalytique. La procédure de lavage a donc été utilisée sur ces matériaux puisque des éléments notamment métalliques (sous forme ionique) restent adsorbés de manière résiduelle.

Le protocole est identique aux expériences précédentes sur les colorants (concentration en matériau 1mg/mL, concentration en colorant 3x10⁻⁵ mol/L). Deux types de colorants utilisés (le bleu de Bromophénol et méthylorange) sous deux sortes de rayonnement (lumière visible et lampe UV).

### c) Résultats et discussion

### • Bleu de Bromophénol

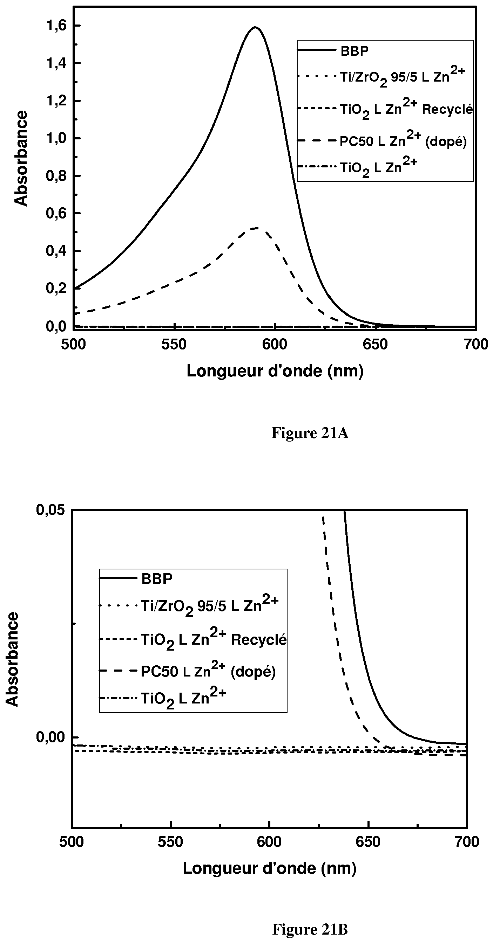

Toutes les solutions ont changé de couleur au contact des matériaux. L'acidification de la surface est toujours d'actualité. La source de rayonnement est, ici, le spot halogène (lumière visible équivalente à la lumière solaire). Le suivi des concentrations est effectué par spectrophotomètre visible et les résultats après 3h de rayonnement sont regroupés dans les figures 21A et 21B.

L'oxyde commercial même dopé ne détruit que partiellement les molécules de colorant. Ce qui signifie que le dopage n'a pas amélioré sa réactivité photocatalytique de manière significative. Tous les autres matériaux ont une efficacité assez grande. Plus aucun pic n'est observé, les spectres sont plats. Ce qui indique que plus aucune molécule ne se trouve en solution.

Ainsi, le recyclage n'a pas altéré la réactivité photocatalytique du matériau. L'hybride Ti/ZrO₂ 95/5 ainsi que le TiO₂ L Zn²⁺ recyclés semblent efficaces.

### • Methylorange

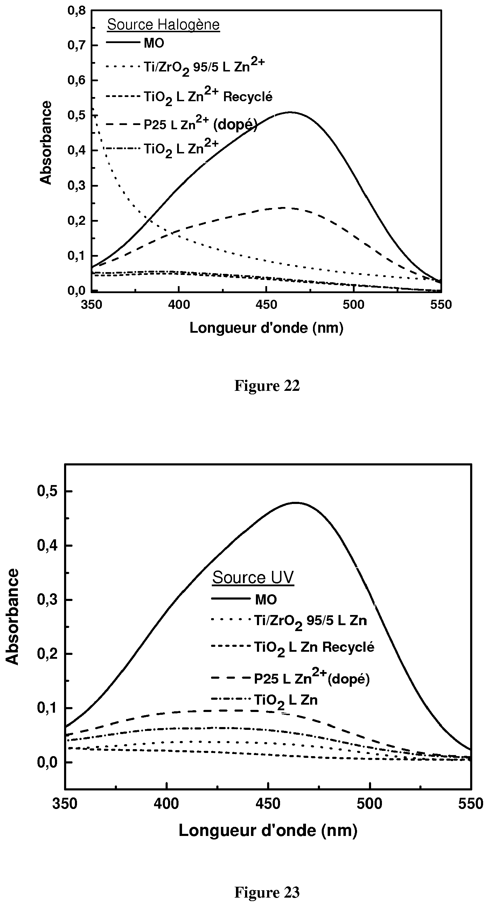

Le protocole est identique à celui de l'essai avec le bleu de bromophénol. Une source UV est également utilisée. Le matériau commercial est ici le P25 qui a lui aussi été dopé. Le suivi des concentrations est effectué à l'aide de la spectrophotométrie et les résultats après 5h de rayonnement sont regroupés dans les figures 22 (lampe halogène) et 23 (lumière UV).

Quelle que soit la source de rayonnement utilisée le matériau commercial dopé présente la réactivité photocatalytique la plus faible. La réactivité semble légèrement meilleure sous rayonnement UV que sous rayonnement halogène. Le dopage n'a donc pas permis d'inverser la tendance même en UV, le matériau le plus efficace reste le matériaux 100% d'oxyde de titane synthétisé et lavé.

Le matériau TiO₂ L Zn recyclé possède une réactivité au moins aussi bonne que le matériau TiO₂. Il s'avère que sous rayonnement UV, le matériau TiO₂ L Zn recyclé est même supérieur, sans doute lié à la procédure de recyclage (utilisation d'acide nitrique).

Enfin le matériau Ti/ZrO₂ est également assez efficace.

L'allure de sa courbe issue de l'expérience avec le spot halogène est due à la présence de particules en solution diffusant dans la cuve au moment de la mesure. Mais les molécules de colorant ont été entièrement éliminées.

### EXEMPLE 14 : Préparation de TiO₂ avec un éther alcényle de polyoxyéthylène glycol

Un matériau TiO₂ L Zn²⁺ a été synthétisé selon le mode opératoire des exemples 1 et 3 en remplaçant le tensioactif par du Brij 97 (C₁₈H₃₅(EO)₁₀OH, commercialisé par exemple par BASF). Ce matériau est appelé TiO₂ Brij L Zn²⁺ pour la suite.

### EXEMPLE 15 : Analyse physico-chimique du TiO₂ Brij L Zn²⁺

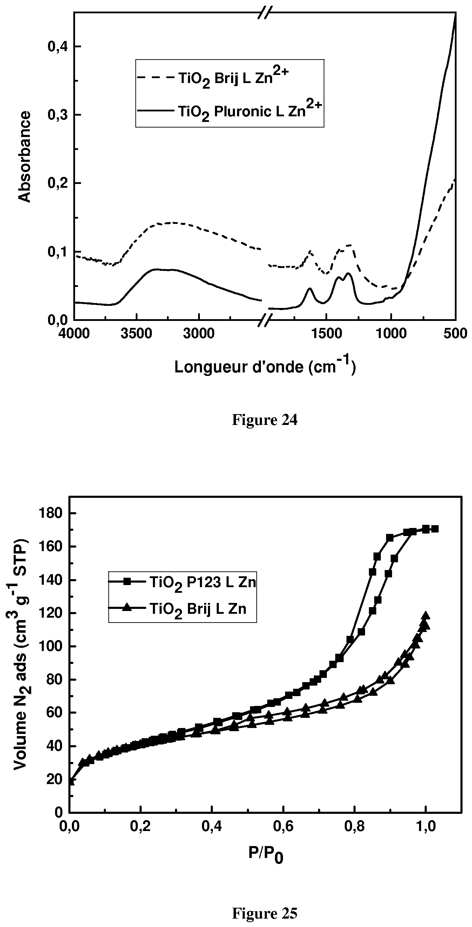

Les spectres IRTF du TiO₂ Brij L Zn²⁺ et du TiO₂ L Zn²⁺ de l'exemple 3 (TiO₂ Pluronic L Zn²⁺) ont été comparés (Figure 24).

La présence d'ions nitrates résiduelle est présente pour les deux matériaux. Les spectres sont similaires. Ce qui signifie que le remplacement du surfactant ne semble pas avoir modifié le matériau.

Le surfactant a bien été éliminé par le lavage, aucun pic caractéristique de la présence de molécules de surfactant n'est visible.

Les deux matériaux ont ensuite été analysés par adsorption volumétrique N₂ (figure 25). Les isothermes d'adsorption/désorption sont assez différentes mais les données extraites notamment la surface spécifique sont assez proches : 144 m²/g pour TiO₂ Brij L Zn²⁺ et 153 m²/g TiO₂ Pluronic L Zn²⁺.

### REFERENCES

[1] Hanaor, D. A. H. ; Sorell, C. C. Review of the anatase to rutile phase transformation. J. Mater Sci, 2011, 46, 855-874.
[2] Ibhadon, O. ; Fitzpatrick, P. Heterogeneous Photocatalysis: Recent Advances and Applications. Catalysts, 2013, 3, 189-218.
[3] Luttrell, T. ; Halpegamage, S. ; Tao, J. ; Kramer, A. ; Sutter, E. ; Batzill, M. Why is anatase a better photocatalyst than rutile? - model studies on epitaxial TiO2 films. Sci Rep., 2014, 9, 4043
[4] Pillai, S. C. ; Periyat, P. ; George, R. ; McCormack, D. E. ; Seery, M. K. ; Hayden, H. ; Colreavy, J. ; Corr, D. ; Hinder, S ; Synthesis of High-Temperature Stable Anatase TiO2 Photocatalyst. J. Phys. Chem. C, 111, 1605 (2007)
[5] Liu, Z. F. ; Tabora, J. ; Davis, R. J. Relationships between Microstructure and Surface Acidity of Ti-Si Mixed Oxide Catalysts. J. Catal., 1994, 149, 117-126.
[6] Mahyar, A. ; Behnajady, M. A. ; Modirshahla, N. Characterization and photocatalytic activity of SiO2-TiO2 mixed oxide nanoparticles prepared by sol-gel method. Indian Journal of Chemistry, 2010, 49A, 1593-1600.
[7] Miao, G. ; Chen, L. ; Qi, Z. Facile Synthesis and Active Photocatalysis of Mesoporous and Microporous TiO2 Nanoparticles. Eur. J. Inorg. Chem., 2012, 5864-5871.
[8] Messina, P. V. ; Schulz, P. C. Adsorption of reactive dyes on titania-silica mesoporous materials. Journal of Colloid and Interface Science, 2006, 299, 305-320.
[9] Enriquez, J. M. H. ; Lajas, L. A. C. ; Alamilla, R. G. ; San Martin, E. A. ; Alamilla, P. G. ; Handy, E. B. ; Galindo, G. C. G. ; Serrano, L. A. G. Synthesis of solide acid catalysts based on TiO2 - SO42- and Pt/TiO2 - SO42- applied in n-hexane isomerisation. Open Journal of Metal, 2013, 3, 34-44.
[10] Cabo, M. ; Pellicer, E. ; Rossinyol, E. ; Estrader, M. ; López-Ortega, A. ;c Nogués, J. ; Castell, O. ; Surinach, S. ; Baró, M. D. Synthesis of compositionally graded nanocast NiO/NiCo2O4/Co3O4 mesoporous composites with tunable magnetic properties. Journal of Materials Chemistry, 2010, 20, 7021 - 7028.
[11] Natl. Bur. Stand. (U.S.) Monogr 25. 1969, 7, 83.
[14] Janus, M. ; Kusiak-Nejman, E. ; Morawski, A. W. Détermination of the photocatalytic activity of TiO2 with high adsorption capacity. Reac Kinet Mech Cat, 2011, 103, 279 - 288.
[15] Wang, N. ; Li, J. ; Lv, W. ; Feng, J. ; Yan, W. Synthesis of polyaniline/Ti02 composite with excellent adsorption performance on acid red G. RSC Adv., 2015, 5, 21132 - 21141.
[16] Behnajady, M. A. ; Yavaru, S. ; Modirshahla, N. Investigation on adsorption capacity of TiO2-P25 nanoparticles in the removal of a mono-azo dye from aqueous solution : a comprehensive isotherm analysis. Chem. Ind. Chem. Eng. Q., 2014, 20, 97 - 107.
[17] Calleja, G. Serrano, D., Sanz, P, Pizarro, P., Garcia, A.; Study on the Synthesis of High-Surface-Area Mesoporous TiO2 in the Presence of Nonionic Surfactants. Ind. Eng. Chem. Res.,2004, 43, 2485-2492.

## Revendications

1. Procédé de préparation d'un nanomatériau composé de 80 à 100 % en moles de TiO₂ et de 0 à 20% en moles d'un autre oxyde métallique ou semi-métallique, notamment choisi parmi SiO₂, ZrO₂, WO₃, ZnO, Al₂O₃ et Fe₂O₃, présentant une surface spécifique comprise entre 100 et 300 m².g⁻¹ et de 1 à 3 groupements hydroxyles par nm², ledit procédé comprenant les étapes suivantes :
a) Synthèse d'un matériau composé de 80 à 100 % en moles de TiO₂ et de 0 à 20 % en moles d'un autre oxyde à partir d'un précurseur d'oxyde de titane ou d'un mélange d'un précurseur d'oxyde de titane et d'un précurseur de l'autre oxyde, la synthèse étant effectuée en milieu aqueux à un pH de 0 à 1 et une température allant de 40 à 95°C et en présence d'un tensioactif non-ionique choisi parmi les éthers alcényles de polyoxyéthylène glycol et les poloxamères ;
b) Elimination du tensioactif du matériau synthétisé à l'étape précédente par les étapes suivantes :
b1) Préparation d'un matériau métallisé par lavage du matériau comprenant le tensioactif avec une solution aqueuse de sel métallique bivalent et une solution aqueuse d'ammoniac,
b2) Récupération du matériau métallisé d'une part et d'une solution de lavage d'autre part,
b3) Traitement du matériau métallisé avec un acide minéral pour enlever le métal de celui-ci,
c) Récupération d'un nanomatériau exempt de tensioactif d'une part et d'une solution résiduelle d'autre part.

2. Procédé selon la revendication 1, dans lequel l'étape a) de synthèse du matériau comprend les étapes suivantes :
a1) préparation d'une solution aqueuse acide du tensioactif non-ionique,
a2) ajout du précurseur d'oxyde de titane ou du mélange du précurseur d'oxyde de titane et du précurseur de l'autre oxyde à la solution aqueuse acide du tensioactif non-ionique, un précipité se formant alors,
a3) agitation forte du milieu réactionnel de façon à dissoudre le précipité formé à l'étape a2) puis faire polymériser le précurseur d'oxyde de titane ou le mélange du précurseur d'oxyde de titane et du précurseur de l'autre oxyde,
a4) placement du mélange réactionnel de l'étape a3) en conditions statiques pendant au moins 24h, et ensuite
a5) récupération d'un matériau, composé de 80 à 100 % en moles de TiO₂ et de 0 à 20 % en moles de l'autre oxyde d'une part et d'une solution résiduelle d'autre part.

3. Procédé selon la revendication 1 ou 2, dans lequel l'étape b) est réalisée *in situ.*

4. Procédé selon l'une quelconque des revendications précédentes, dans lequel le sel métallique bivalent est choisi parmi les sels de cuivre (II), cobalt (II), nickel (II) et zinc (II).

5. Procédé selon l'une quelconque des revendications précédentes, dans lequel l'autre oxyde est choisi parmi SiO₂ et ZrO₂.

6. Procédé selon l'une quelconque des revendications précédentes, dans lequel le nanomatériau est composé de 100 % en moles de TiO₂.

7. Nanomatériau susceptible d'être obtenu par le procédé selon l'une des revendications de procédé 1 à 6, composé de 80 à 100 % en moles de Ti0₂ et de 0 à 20 % en moles d'un autre oxyde métallique ou semi-métallique choisi parmi Si0₂, Zr0₂, W0₃, ZnO et AL₂0₃ et Fe₂0₃, notamment parmi Si0₂ et Zr0₂, présentant :
- des cations métalliques bivalents adsorbés à la surface du nanomatériau ;
- une acidité à la surface du matériau, provenant de l'étape b) du procédé,
- des ions nitrate,
- une surface spécifique comprise entre 100 et 300 m².g⁻¹,
- de 1 à 3 groupements hydroxyles par nm²,
- un pH compris entre 3 et 5
- et étant de structure nanocristalline rutile lorsqu'il est composé de 100 % en moles de Ti0₂.

8. Nanomatériau selon la revendication 7, **caractérisé en ce qu'**il est composé de 80 à 95 % en moles de Ti0₂ et de 5 à 20 % en moles d'un autre oxyde métallique ou semi-métallique choisi parmi Si0₂, Zr0₂, W0₃, ZnO et AL₂0₃ et Fe₂0₃, notamment parmi Si0₂ et Zr0₂.

9. Nanomatériau selon la revendication 7 ou 8, **caractérisé en ce que** les cations métalliques sont Zn²⁺, ou Ni²⁺ ou Cu²⁺.

10. Utilisation du nanomatériau selon l'une des revendications 7 à 9, pour la dégradation photocatalytique de composés.

11. Utilisation selon la revendication 10, **caractérisée en ce que** les composés sont choisis parmi les colorants, les principes actifs pharmaceutiques, les herbicides, les pesticides, les fongicides, les hormones, les saccharides, tels que le glucose, et/ou les hydrocarbures.

## Patentansprüche

1. Verfahren zur Herstellung eines Nanomaterials, zusammengesetzt aus 80 bis 100 mol-% TiO₂ und aus 0 bis 20 mol-% eines anderen metallischen oder halbmetallischen Oxids, insbesondere ausgewählt aus SiO₂, ZrO₂, WO₃, ZnO, Al₂O₃ und Fe₂O₃, mit einer spezifischen Oberfläche zwischen 100 und 300 m².g⁻¹ und 1 bis 3 Hydroxygruppen pro nm², wobei das Verfahren die folgenden Schritte umfasst:
a) Synthese eines Materials, zusammengesetzt aus 80 bis 100 mol-% TiO₂ und aus 0 bis 20 mol-% eines anderen Oxids, aus einem Titanoxidvorläufer oder aus einer Mischung eines Titanoxidvorläufers und eines Vorläufers des anderen Oxids, wobei die Synthese in einem wässrigen Medium bei einem pH von 0 bis 1 und einer Temperatur im Bereich von 40 bis 95 °C und in Gegenwart eines nichtionischen Tensids, ausgewählt aus den Alkenylethern von Polyoxyethylenglycol und den Poloxameren, durchgeführt wird;
b) Entfernung des Tensids aus dem im vorherigen Schritt synthetisierten Material durch die folgenden Schritte:
b1) Herstellung eines metallisierten Materials durch Waschen des Materials, das das Tensid umfasst, mit einer wässrigen Lösung eines bivalenten Metallsalzes und einer wässrigen Ammoniak-Lösung,
b2) Gewinnung des metallisierten Materials einerseits und einer Waschlösung andererseits,
b3) Behandlung des metallisierten Materials mit einer Mineralsäure zum Entfernen des Metalls daraus,
c) Gewinnung eines tensidfreien Nanomaterials einerseits und einer Restlösung andererseits.

2. Verfahren nach Anspruch 1, bei dem der Schritt a) der Synthese des Materials die folgenden Schritte umfasst:
a1) Herstellung einer sauren wässrigen Lösung des nichtionischen Tensids,
a2) Zugabe des Titanoxidvorläufers oder der Mischung des Titanoxidvorläufers und des Vorläufers des anderen Oxids zu der sauren wässrigen Lösung des nichtionischen Tensids, wobei sich dann ein Niederschlag bildet,
a3) starkes Rühren des Reaktionsmediums, um den in Schritt a2) gebildeten Niederschlag aufzulösen, dann den Titanoxidvorläufer oder die Mischung des Titanoxidvorläufers und des Vorläufers des anderen Oxids zum Polymerisieren bringen,
a4) die Reaktionsmischung von Schritt a3) mindestens 24 Stunden lang statischen Bedingungen aussetzen und dann
a5) Gewinnung eines Materials, zusammengesetzt aus 80 bis 100 mol-% TiO₂ und aus 0 bis 20 mol-% des anderen Oxids einerseits und einer Restlösung andererseits.

3. Verfahren nach Anspruch 1 oder 2, bei dem Schritt b) *in situ* durchgeführt wird.

4. Verfahren nach einem der vorhergehenden Ansprüche, bei dem das bivalente Metallsalz ausgewählt ist aus den Salzen von Kupfer (II), Kobalt (II), Nickel (II) und Zink (II).

5. Verfahren nach einem der vorhergehenden Ansprüche, bei dem das andere Oxid ausgewählt ist aus SiO₂ und ZrO₂.

6. Verfahren nach einem der vorhergehenden Ansprüche, bei dem das Nanomaterial zusammengesetzt ist aus 100 mol-% TiO₂.

7. Nanomaterial erhältlich durch das Verfahren nach einem der Ansprüche 1 bis 6, zusammengesetzt aus 80 bis 100 mol-% TiO₂ und aus 0 bis 20 mol-% eines anderen metallischen oder halbmetallischen Oxids, ausgewählt aus SiO₂, ZrO₂, WO₃, ZnO und Al₂O₃ und Fe₂O₃, insbesondere aus SiO₂ und ZrO₂, aufweisend:
- bivalente Metallkationen, absorbiert an der Oberfläche des Nanomaterials;
- eine Azidität an der Oberfläche des Materials, stammend aus Schritt b) des Verfahrens,
- Nitrationen,
- eine spezifische Oberfläche zwischen 100 und 300 m².g⁻¹,
- 1 bis 3 Hydroxygruppen pro nm²,
- einen pH zwischen 3 und 5
- und mit einer nanokristalline Rutilstruktur, wenn es zu 100 mol-% aus TiO₂ zusammengesetzt ist.

8. Nanomaterial nach Anspruch 7, **dadurch gekennzeichnet, dass** es aus 80 bis 95 mol-% TiO₂ und aus 5 bis 20 mol-% eines anderen metallischen oder halbmetallischen Oxids, ausgewählt aus SiO₂, ZrO₂, WO₃, ZnO und Al₂O₃ und Fe₂O₃, insbesondere aus SiO₂ und ZrO₂, zusammengesetzt ist.

9. Nanomaterial nach Anspruch 7 oder 8, **dadurch gekennzeichnet, dass** die Metallkationen Zn²⁺ oder Ni²⁺ oder Cu²⁺ sind.

10. Verwendung des Nanomaterials nach einem der Ansprüche 7 bis 9 zum photokatalytischen Abbau von Verbindungen.

11. Verwendung nach Anspruch 10, **dadurch gekennzeichnet, dass** die Verbindungen ausgewählt sind aus den Farbstoffen, den pharmazeutischen Wirkstoffen, den Herbiziden, den Pestiziden, den Fungiziden, den Hormonen, den Sacchariden wie Glucose und/oder den Kohlenwasserstoffen.

## Claims

1. Method of preparing a nanomaterial containing 80 to 100 mol% of TiO₂ and 0 to 20 mol% of another metal or semi-metal oxide, chosen particularly from among SiO₂, ZrO₂, WO₃, ZnO, Al₂O₃ and Fe₂O₃, with a specific surface area of between 100 and 300 m².g⁻¹ and from 1 to 3 hydroxyl groups per nm², said method including the following steps:
a) Synthesis of a material composed of 80 to 100 mol% of TiO₂ and 0 to 20 mol% of another oxide starting from a titanium oxide precursor or a mixture of a titanium oxide precursor and a precursor of another oxide, the synthesis being made in an aqueous medium at a pH between 0 and 1 and at a temperature from 40 to 95°C, and in the presence of a non-ionic surfactant chosen from among alkenyl ethers of polyoxyethylene glycol and poloxamers;
b) Elimination of the surfactant from the material synthesised in the previous step by the following steps:
b1) Preparation of a metallised material by washing the material containing the surfactant with an aqueous solution of a bivalent metal salt and an aqueous solution of ammonia,
b2) Recovery of the metallised material on the one hand and a washing solution on the other hand,
b3) Treatment of the metallised material with a mineral acid to remove the metal from the material,
c) Recovery of a nanomaterial with no surfactant on the one hand and a residual solution on the other hand.

2. Method according to claim 1, in which the material synthesis step a) comprises the following steps:
a1) preparation of an acidic aqueous solution of the non-ionic surfactant,
a2) addition of the titanium oxide precursor or the mixture of the titanium oxide precursor and the precursor of the other oxide to the acidic aqueous solution of the non-ionic surfactant, and a precipitate then forms,
a3) vigorously stirring of the reaction medium so as to dissolve the precipitate formed in step a2) then polymerise the titanium oxide precursor or the mixture of the titanium oxide precursor and the precursor of the other oxide,
a4) placing the reaction mixture from step a3) under static conditions for at least 24h, and then
a5) recovery of a material composed of 80 to 100 mol% of TiO₂ and 0 to 20 mol% of the other oxide on the one hand, and a residual solution on the other hand.

3. Method according to claim 1 or 2, in which step b) is done *in situ.*

4. Method according to any one of the previous claims, in which the bivalent metal salt is chosen from among salts of copper (II), cobalt (II), nickel (II) and zinc (II).

5. Method according to any one of the previous claims, in which the other oxide is chosen from among SiO₂ and ZrO₂.

6. Method according to any one of the previous claims, in which the nanomaterial is composed of 100 mol% of TiO₂.

7. Nanomaterial obtainable by a method according to any one of claims 1 to 6, composed of 80 to 100 mol% of TiO₂ and 0 to 20 mol% of another metal or semi-metal oxide chosen from among SiO₂, ZrO₂, WO₃, ZnO and Al₂O₃ and Fe₂O₃, particularly among SiO₂ and ZrO₂, with
- divalent metal cations adsorbed on the surface of the nanomaterial,
- acidity on the surface of the material coming from step b) of the method,
- nitrate ions,
- a specific surface area equal to between 100 and 300 m².g⁻¹,
- from 1 to 3 hydroxyl groups per nm²,
- a pH between 3 and 5
- and having a rutile nanocrystalline structure when it is composed of 100 mol% of TiO₂.

8. Nanomaterial according to claim 7, **characterised in that** it is composed of 80 to 95 mol% of TiO₂ and 5 to 20 mol% of another metal or semi-metal oxide chosen from among SiO₂, ZrO₂, WO₃, ZnO and Al₂O₃ and Fe₂O₃, and particularly among SiO₂ and ZrO₂.

9. Nanomaterial according to claim 7 or 8, **characterised in that** metal cations are Zn²⁺, or Ni²⁺, or Cu²⁺.

10. Use of the nanomaterial according to one of claims 7 to 9 for the photocatalytic degradation of compounds.

11. Use according to claim 10, **characterised in that** the compounds are chosen from among dyes, pharmaceutical active ingredients, herbicides, pesticides, fungicides, hormones, saccharides, such as glucose, and/or hydrocarbons.
